# EUROPEAN PATENT APPLICATION

(11) **EP 4 841 519 A1**
(43) Date of publication of application: **18.11.2026**
(21) Application number: 24921420.6
(22) Date of filing: 06.09.2024
(51) Int. Cl.: G06N 5/04

(54) **COMPUTING SYSTEM, MULTI-ROUND SESSION INFERENCE METHOD, APPARATUS AND COMPUTING DEVICE CLUSTER**

(30) Priority: 31.01.2024 CN 202410137574; 28.02.2024 CN 202410223741
(71) Applicant: Huawei Cloud Computing Technologies Co., Ltd., Gui'an New District, Guizhou 550025 (CN)
(72) Inventor: GAO, Bin, Guiyang, Guizhou 550025 (CN); ZUO, Pengfei, Guiyang, Guizhou 550025 (CN); YANG, Xingkun, Guiyang, Guizhou 550025 (CN); DENG, Junbo, Guiyang, Guizhou 550025 (CN)
(74) Representative: Goddar, Heinz J.
(86) International application number: PCT/CN2024/117525
(87) International publication number: WO 2025/161395

(57) **Abstract**

This application provides a computing system, a multi-turn session inference method and apparatus, and a compute device cluster, and pertains to the field of cloud computing technologies. In the system, an external storage device stores a historical key-value cache of a completed session. Because capacity of the external storage device is far greater than capacity of an HBM in an accelerator, a hit rate of historical key-value caches can be improved, thereby avoiding key-value cache recomputation. In addition, when the accelerator processes a session, a host can preload a historical key-value cache of a to-be-processed session in a job queue from the external storage device to a memory of the host. When performing i^{th}-layer computing on the session, the accelerator can preload, from the memory of the host, a historical key-value cache required by (i+1)^{th}-layer computing. Because a computing process and a data loading process are synchronously performed, there is no need for the computing process to wait for completion of data loading. In this way, time overheads of accessing the external storage device by the accelerator can be hidden, and multi-turn session inference efficiency is improved.

## Description

This application claims priorities to Chinese Patent Application No. 202410137574.7, filed on January 31, 2024 and entitled "DATA PROCESSING METHOD AND APPARATUS, AND ANOTHER DEVICE", and to Chinese Patent Application No. 202410223741.X, filed on February 28, 2024 and entitled "COMPUTING SYSTEM, MULTI-TURN SESSION INFERENCE METHOD AND APPARATUS, AND COMPUTE DEVICE CLUSTER", both of which are incorporated herein by reference in their entireties.

### TECHNICAL FIELD

This application relates to the field of cloud computing technologies, and in particular, to a computing system, a multi-turn session inference method and apparatus, and a compute device cluster.

### BACKGROUND

A generative large model based on a transformer (transformer) architecture can be applied to multi-turn session inference scenarios. In a turn of a session, the generative large model can process an input token sequence token[1:s] (that is, a question prompt), and performs inference to obtain a next token ((s+1)^{th} token) token[s+1], to obtain a new token sequence: token[1:s+1]. Token[1:s+1] is input into the model to obtain token[s+2] through inference, and the rest may be deduced by analogy, until a complete token sequence is obtained or an inference terminator appears. The generative large model outputs the token sequence obtained through inference, that is, outputs an answer, to complete one turn of a session, where s is an integer greater than 1. In a process of inference of each token, the generative large model generates corresponding intermediate key (key) and value (value) data data when processing any input token, and the generated intermediate data is further used in a process of inference of a subsequent token. In addition, in a multi-turn session, each turn of a session uses tokens input and generated in previous turns of the session, and further uses intermediate data corresponding to the tokens input and generated in the previous turns of the session. Therefore, to save compute resources and improve inference efficiency, the intermediate data corresponding to the tokens input and generated in the previous turns of the session is stored in a high-bandwidth memory (high-bandwidth memory, HBM) in an accelerator. In other words, a historical key-value cache (KV cache) of the session is stored in the HBM in the accelerator, so that during subsequent sessions, historical KV caches of the previous turns of the session can be directly reused for inference without recomputation.

However, in the foregoing method, the KV cache storage relies on the HBM, but capacity of the HBM is limited. When available storage space of the HBM is insufficient, the accelerator deletes, based on service requirements, the KV cache stored in the HBM. As a result, the subsequent session cannot reuse the historical KV cache, and the generative large model incurs huge recomputation overheads of the historical KV cache, which still leads to reduction of the inference efficiency and a waste of the compute resources.

### SUMMARY

Embodiments of this application provide a computing system, a multi-turn session inference method and apparatus, and a compute device cluster, to avoid KV cache recomputation and improve multi-turn session inference efficiency. The technical solutions are as follows.

According to a first aspect, a computing system is provided. The computing system includes a host, an accelerator of the host, and an external storage device.

The external storage device is configured to store a historical KV cache of a completed session. The host is configured to preload a historical KV cache of a to-be-processed session in a job queue from the external storage device to a memory of the host when the accelerator processes the session. The accelerator is configured to preload, from the memory of the host to the accelerator, a historical KV cache required by (i+1)^{th}-layer computing when i^{th}-layer computing of a generative large model is performed on the session.

In the foregoing system, because capacity of the external storage device is far greater than capacity of an HBM in the accelerator, the external storage device can store a large quantity of historical KV caches, to improve a hit rate of the historical KV caches, thereby avoiding KV cache recomputation, improving multi-turn session inference efficiency, and saving compute resources. In addition, because a computing process and a data loading process are synchronously performed, there is no need for the computing process to wait for completion of data loading. In this way, time overheads of accessing the external storage device by the accelerator can be hidden, and the multi-turn session inference efficiency is improved.

In some embodiments, a historical KV cache that is of an input of a first session and that is at an (i+1)^{th} layer is irrelevant to positional encoding of the input of the first session.

Irrelevance means that the positional encoding of the input of the first session does not affect the historical KV cache of the first session.

In some embodiments, a quantity of tokens included in the input of the first session is greater than or equal to a quantity of tokens that can be accommodated by a context window of the generative large model.

The accelerator is configured to: when performing i^{th}-layer computing on the first session, load, from the memory, a historical KV cache that is of a first sub-input and that is at the (i+1)^{th} layer. The first sub-input is a sub-input of the input of the first session, and a quantity of tokens included in the first sub-input is less than the quantity of tokens that can be accommodated by the context window.

In the foregoing system, the stored KV cache is decoupled from the positional encoding. When the context window overflows, a change in the positional encoding of the input of the generative large model does not lead to a failure of the stored KV cache. Therefore, the accelerator can reuse the truncated historical KV cache of the input, thereby avoiding KV cache recomputation caused by the overflow of the context window, improving the inference efficiency, and saving the compute resources.

In some embodiments, the accelerator is further configured to:
embed positional encoding of the first sub-input into the historical KV cache that is of the first sub-input and that is at the (i+1)^{th} layer; and perform (i+1)^{th}-layer computing on the first session based on the input of the first session and the historical KV cache, embedded with the positional encoding, that is of the first sub-input and that is at the (i+1)^{th} layer.

The positional encoding is relative positional encoding (relative positional encoding, RPE).

In some embodiments, the accelerator includes a first buffer and a second buffer, the first buffer is configured to store a historical KV cache of the first session, the second buffer is configured to store a historical KV cache that is of an input of a second session in the job queue and that is at a 1^{st} layer, and the second session is a 1^{st} to-be-processed session after the first session in the job queue.

The accelerator is configured to: when performing i^{th}-layer computing on the first session, load, from the memory to the first buffer, the historical KV cache that is of the input of the first session and that is at the (i+1)^{th} layer; and when performing N^{th}-layer computing on the first session, load, from the memory to the second buffer, the historical KV cache that is of the input of the second session and that is at the 1^{st} layer.

In the foregoing system, the HBM in the accelerator includes the first buffer and the second buffer. The first buffer is configured to store the KV cache of the session currently being processed by the accelerator, and the second buffer is configured to store the KV cache of the session to be processed by the accelerator. When processing the first session based on the KV cache in the first buffer, the accelerator loads, to the second buffer, a KV cache that is of the second session and that is required by 1^{st}-layer computing. After completing processing of the first session, the accelerator processes the second session based on the KV cache in the second buffer. In this case, the second buffer becomes an execution buffer. When processing the second session, the accelerator releases the first buffer by using an asynchronous thread, so that a computing thread of the accelerator can immediately start to process the second session after completing processing of the first session, without waiting for completion of the release of the first buffer. Therefore, a time interval between the two sessions caused by loading data required by a next session is hidden, and inference efficiency is improved.

In some embodiments, the accelerator is further configured to: when performing (i+1)^{th}-layer computing on the first session, write a KV cache generated by performing i^{th}-layer computing on the first session into the memory.

In the foregoing system, when performing (i+1)^{th}-layer computing, the accelerator writes the KV cache generated through i^{th}-layer computing back to the memory of the host. In comparison with that after inference of a turn of a session is completed, a KV cache generated in the current turn of the session is written into the memory of the host, a time interval that is between two adjacent turns of sessions and that is caused by writeback of data generated in a previous turn of the session can be hidden, thereby improving inference efficiency.

In some embodiments, the accelerator includes a third buffer, and the third buffer is configured to store a KV cache generated by the generative large model processing the first session.

The accelerator of the host is configured to: if a KV cache that has not been written into the memory exists in KV caches generated by the generative large model processing the first session when N^{th}-layer computing on the first session is completed, write, into the third buffer, the KV cache that has not been written into the memory; and when the second session in the job queue is processed by using the generative large model, write the KV cache in the third buffer into the memory.

In the foregoing system, the HBM in the accelerator further includes the third buffer. After completing processing of the first session, the accelerator writes, from the first buffer to the third buffer, the KV cache that is generated in a process of processing the first session and that has not been written back to the memory. Because efficiency of copying data between the first buffer and the third buffer is high, after completing processing of the first session, the accelerator can quickly release the first buffer, so that a KV cache required by subsequent processing can be loaded to the first buffer, instead of releasing the first buffer after waiting for all the KV caches generated by processing the first session to be written into the memory. This hides a time interval that is between two sessions and that is caused by waiting for writeback of data of a previous session, and improves inference efficiency.

In some embodiments, the host is configured to: if a historical KV cache of a first to-be-processed session in the job queue does not exist in the memory, load the historical KV cache of the first to-be-processed session from the external storage device to the memory. The first to-be-processed session is a first quantity of to-be-processed sessions at the head of the job queue.

In the foregoing system, when the accelerator processes the session, the host can preload the historical KV cache of the to-be-processed session in the job queue from the external storage device to the memory of the host. Because the computing process and the data loading process are synchronously performed, there is no need for the computing process to wait for completion of data loading. In this way, the time overheads of accessing the external storage device by the accelerator can be hidden, and the multi-turn session inference efficiency is improved.

In some embodiments, a quantity of session turns included in the first to-be-processed session is determined based on capacity of the memory.

In some embodiments, the host is configured to: if available storage space of the memory is sufficient, load the historical KV cache of the first to-be-processed session from the external storage device to the memory; and if the available storage space of the memory is insufficient, write a historical KV cache of a second to-be-processed session in the job queue from the memory into the external storage device, and load the historical KV cache of the first to-be-processed session from the external storage device to the memory. The second to-be-processed session is a session in the job queue other than the first to-be-processed session.

In some embodiments, the host is further configured to: if available storage space of the external storage device is insufficient, delete a historical KV cache of a third to-be-processed session in the job queue from the external storage device. The third to-be-processed session is a second quantity of to-be-processed sessions at a queue tail of the job queue.

According to a second aspect, a multi-turn session inference method is provided, applied to a computing system. The computing system includes a host, an accelerator of the host, and an external storage device, the external storage device is configured to store a historical key-value cache KV cache of a session, the host is configured to load a historical KV cache of a to-be-processed session in a job queue from the external storage device to a memory of the host, and the method includes:

The accelerator performs, based on the job queue, inference on a first session in the job queue by using a generative large model. The first session is a turn of a multi-turn session, and the generative large model includes N layers. When i^{th}-layer computing is performed on the first session by the accelerator, a historical KV cache that is of an input of the first session and that is at an (i+1)^{th} layer is loaded from the memory to the accelerator, and i is an integer greater than or equal to 1 and less than N.

In some embodiments, the historical KV cache that is of the input of the first session and that is at the (i+1)^{th} layer is irrelevant to positional encoding of the input of the first session.

In some embodiments, a quantity of tokens included in the input of the first session is greater than or equal to a quantity of tokens that can be accommodated by a context window of the generative large model.

When i^{th}-layer computing is performed on the first session, that the historical KV cache that is of the input of the first session and that is at the (i+1)^{th} layer is loaded from the memory includes: when i^{th}-layer computing is performed on the first session, loading, from the memory, a historical KV cache that is of a first sub-input and that is at the (i+1)^{th} layer. The first sub-input is a sub-input of the input of the first session, and a quantity of tokens included in the first sub-input is less than the quantity of tokens that can be accommodated by the context window.

In some embodiments, the processing the first session in the job queue by using the generative large model includes:
embedding positional encoding of the first sub-input into the historical KV cache that is of the first sub-input and that is at the (i+1)^{th} layer; and performing (i+1)^{th}-layer computing on the first session based on the input of the first session and the historical KV cache, embedded with the positional encoding, that is of the first sub-input and that is at the (i+1)^{th} layer.

In some embodiments, the accelerator includes a first buffer and a second buffer, the first buffer is configured to store a historical KV cache of the first session, the second buffer is configured to store a historical KV cache that is of an input of a second session in the job queue and that is at a 1^{st} layer, and the second session is a 1^{st} to-be-processed session after the first session in the job queue.

When i^{th}-layer computing is performed on the first session, that the historical KV cache that is of the input of the first session and that is at the (i+1)^{th} layer is loaded from the memory includes: When the accelerator performs i^{th}-layer computing on the first session, the accelerator loads, from the memory to the first buffer, the historical KV cache that is of the input of the first session and that is at the (i+1)^{th} layer.

In some embodiments, the method further includes:
When the accelerator performs N^{th}-layer computing on the first session, the accelerator loads, from the memory to the second buffer, the historical KV cache that is of the input of the second session and that is at the 1^{st} layer.

In some embodiments, the method further includes:
When the accelerator performs (i+1)^{th}-layer computing on the first session, the accelerator writes a KV cache generated by performing i^{th}-layer computing on the first session into the memory.

In some embodiments, the accelerator includes a third buffer, and the third buffer is configured to store a KV cache generated by the generative large model processing the first session.

When (i+1)^{th}-layer computing is performed on the first session, the writing the KV cache generated by performing i^{th}-layer computing on the first session into the memory includes: If a KV cache that has not been written into the memory exists in KV caches generated by the generative large model processing the first session when the accelerator completes N^{th}-layer computing on the first session, the accelerator writes, into the third buffer, the KV cache that has not been written into the memory; and when the accelerator processes the second session in the job queue by using the generative large model, the accelerator writes the KV cache in the third buffer into the memory.

In some embodiments, the method further includes: If a historical KV cache of a first to-be-processed session in the job queue does not exist in the memory, the host loads the historical KV cache of the first to-be-processed session from the external storage device to the memory. The first to-be-processed session is a first quantity of to-be-processed sessions at the head of the job queue.

In some embodiments, a quantity of session turns included in the first to-be-processed session is determined based on capacity of the memory.

In some embodiments, if the historical KV cache of the first to-be-processed session in the job queue does not exist in the memory, that the host loads the historical KV cache of the first to-be-processed session from the external storage device to the memory includes:
If available storage space of the memory is sufficient, the host loads the historical KV cache of the first to-be-processed session from the external storage device to the memory; and if the available storage space of the memory is insufficient, the host writes a historical KV cache of a second to-be-processed session in the job queue from the memory into the external storage device, and loads the historical KV cache of the first to-be-processed session from the external storage device to the memory. The second to-be-processed session is a session in the job queue other than the first to-be-processed session.

In some embodiments, the method further includes:
If available storage space of the external storage device is insufficient, the host deletes a historical KV cache of a third to-be-processed session in the job queue from the external storage device. The third to-be-processed session is a second quantity of to-be-processed sessions at a queue tail of the job queue.

According to a third aspect, a multi-turn session inference method is provided, applied to an accelerator of a host in a computing system. The computing system further includes the host and an external storage device, the external storage device is configured to store a historical key-value cache KV cache of a session, the host is configured to load a historical KV cache of a to-be-processed session in a job queue from the external storage device to a memory of the host, and the method includes:
performing, based on the job queue, inference on a first session in the job queue by using a generative large model. The first session is a turn of a multi-turn session, and the generative large model includes N layers. When i^{th}-layer computing is performed on the first session, a historical KV cache that is of an input of the first session and that is at an (i+1)^{th} layer is loaded from the memory, and i is an integer greater than or equal to 1 and less than N.

In some embodiments, the historical KV cache that is of the input of the first session and that is at the (i+1)^{th} layer is irrelevant to positional encoding of the input of the first session.

In some embodiments, a quantity of tokens included in the input of the first session is greater than or equal to a quantity of tokens that can be accommodated by a context window of the generative large model.

When i^{th}-layer computing is performed on the first session, that the historical KV cache that is of the input of the first session and that is at the (i+1)^{th} layer is loaded from the memory includes: when i^{th}-layer computing is performed on the first session, loading, from the memory, a historical KV cache that is of a first sub-input and that is at the (i+1)^{th} layer. The first sub-input is a sub-input of the input of the first session, and a quantity of tokens included in the first sub-input is less than the quantity of tokens that can be accommodated by the context window.

In some embodiments, the processing the first session in the job queue by using the generative large model includes:
embedding positional encoding of the first sub-input into the historical KV cache that is of the first sub-input and that is at the (i+1)^{th} layer; and performing (i+1)^{th}-layer computing on the first session based on the input of the first session and the historical KV cache, embedded with the positional encoding, that is of the first sub-input and that is at the (i+1)^{th} layer.

In some embodiments, the accelerator includes a first buffer and a second buffer, the first buffer is configured to store a historical KV cache of the first session, the second buffer is configured to store a historical KV cache that is of an input of a second session in the job queue and that is at a 1^{st} layer, and the second session is a 1^{st} to-be-processed session after the first session in the job queue.

When i^{th}-layer computing is performed on the first session, that the historical KV cache that is of the input of the first session and that is at the (i+1)^{th} layer is loaded from the memory includes: when i^{th}-layer computing is performed on the first session, loading, from the memory to the first buffer, the historical KV cache that is of the input of the first session and that is at the (i+1)^{th} layer.

In some embodiments, the method further includes: when N^{th}-layer computing is performed on the first session, loading, from the memory to the second buffer, the historical KV cache that is of the input of the second session and that is at the 1^{st} layer.

In some embodiments, the method further includes: when (i+1)^{th}-layer computing is performed on the first session, writing a KV cache generated by performing i^{th}-layer computing on the first session into the memory.

In some embodiments, the accelerator includes a third buffer, and the third buffer is configured to store a KV cache generated by the generative large model processing the first session.

When (i+1)^{th}-layer computing is performed on the first session, the writing the KV cache generated by performing i^{th}-layer computing on the first session into the memory includes: if a KV cache that has not been written into the memory exists in KV caches generated by the generative large model processing the first session when N^{th}-layer computing on the first session is completed, writing, into the third buffer, the KV cache that has not been written into the memory; and when the second session in the job queue is processed by using the generative large model, writing the KV cache in the third buffer into the memory.

According to a fourth aspect, a multi-turn session inference method is provided, applied to a host in a computing system. The computing system further includes an accelerator of the host and an external storage device, the external storage device is configured to store a historical key-value cache KV cache of a session, the accelerator is configured to perform, based on a job queue, inference on a first session in the job queue by using a generative large model, the first session is a turn of a multi-turn session, and the generative large model includes N layers. When i^{th}-layer computing is performed on the first session, a historical KV cache that is of an input of the first session and that is at an (i+1)^{th} layer is loaded from a memory, and i is an integer greater than or equal to 1 and less than N.

The method includes:
loading a historical KV cache of a to-be-processed session in the job queue from the external storage device to the memory of the host; and storing the historical KV cache of the to-be-processed session.

In some embodiments, the loading the historical KV cache of the to-be-processed session in the job queue from the external storage device to the memory of the host includes:
if a historical KV cache of a first to-be-processed session in the job queue does not exist in the memory, loading the historical KV cache of the first to-be-processed session from the external storage device to the memory. The first to-be-processed session is a first quantity of to-be-processed sessions at the head of the job queue.

In some embodiments, a quantity of session turns included in the first to-be-processed session is determined based on capacity of the memory.

In some embodiments, if the historical KV cache of the first to-be-processed session in the job queue does not exist in the memory, the loading, by the host, the historical KV cache of the first to-be-processed session from the external storage device to the memory includes:
if available storage space of the memory is sufficient, loading the historical KV cache of the first to-be-processed session from the external storage device to the memory; and if the available storage space of the memory is insufficient, writing a historical KV cache of a second to-be-processed session in the job queue from the memory into the external storage device, and loading the historical KV cache of the first to-be-processed session from the external storage device to the memory. The second to-be-processed session is a session in the job queue other than the first to-be-processed session.

In some embodiments, the method further includes:
if available storage space of the external storage device is insufficient, deleting a historical KV cache of a third to-be-processed session in the job queue from the external storage device. The third to-be-processed session is a second quantity of to-be-processed sessions at a queue tail of the job queue.

According to a fifth aspect, a multi-turn session inference apparatus is provided, used in an accelerator of a host in a computing system. The apparatus includes at least one functional module, and the at least one functional module is configured to perform the multi-turn session inference method according to any one of the third aspect or the possible implementations of the third aspect.

According to a sixth aspect, a multi-turn session inference apparatus is provided, used in a host in a computing system. The apparatus includes at least one functional module, and the at least one functional module is configured to perform the multi-turn session inference method according to any one of the fourth aspect or the possible implementations of the fourth aspect.

According to a seventh aspect, an accelerator is provided. The accelerator includes a computing core and a memory. The accelerator is configured to perform the multi-turn session inference method according to any one of the third aspect or the possible implementations of the third aspect, the memory is configured to store computing data, and the computing core is configured to perform a computing operation on the computing data stored in the memory.

According to an eighth aspect, a host is provided. The host includes a processor and a memory, and the host is configured to perform the multi-turn session inference method according to any one of the fourth aspect or the possible implementations of the fourth aspect.

According to a ninth aspect, a compute device cluster is provided. The compute device cluster includes at least one compute device, each compute device includes a host and an accelerator of the host, an external storage device is located in the at least one compute device, the external storage device is configured to store a historical KV cache of a session, and the host is configured to load a historical KV cache of a to-be-processed session in a job queue from the external storage device to a memory of the host.

The host in the compute device cluster is configured to perform the multi-turn session inference method according to any one of the fourth aspect or the possible implementations of the fourth aspect.

The accelerator in the compute device cluster is configured to perform the multi-turn session inference method according to any one of the third aspect or the possible implementations of the third aspect.

According to a tenth aspect, a computer program product including instructions is provided. When the instructions are run by a compute device cluster, the compute device cluster performs the multi-turn session inference method according to any one of the third aspect or the possible implementations of the third aspect, or performs the multi-turn session inference method according to any one of the fourth aspect or the possible implementations of the fourth aspect.

According to an eleventh aspect, a computer-readable storage medium is provided, including computer program instructions. When the computer program instructions are executed by a compute device cluster, the compute device cluster performs the multi-turn session inference method according to any one of the third aspect or the possible implementations of the third aspect, or performs the multi-turn session inference method according to any one of the fourth aspect or the possible implementations of the fourth aspect.

Based on the implementations provided in the foregoing aspects, further combinations in this application can be made to provide more implementations.

### BRIEF DESCRIPTION OF DRAWINGS

FIG. 1 is a diagram of a structure of a computing system according to an embodiment of this application;
FIG. 2 is a diagram of functions of a computing system according to an embodiment of this application;
FIG. 3 is a flowchart of a multi-turn session inference method according to an embodiment of this application;
FIG. 4 is a diagram of directly truncating a KV cache after a context window overflows according to an embodiment of this application;
FIG. 5 is a diagram of performing inference based on a KV cache decoupled from positional encoding according to an embodiment of this application;
FIG. 6 is a diagram in which a computing process and a data loading process are parallel in a multi-turn session inference method according to an embodiment of this application;
FIG. 7 is a diagram in which a computing process and a data writeback process are parallel in a multi-turn session inference method according to an embodiment of this application;
FIG. 8 is a diagram of a data migration process between a memory of the host and an external storage device in a multi-turn session inference process according to an embodiment of this application;
FIG. 9 is a diagram of a structure of a multi-turn session inference apparatus according to an embodiment of this application;
FIG. 10 is a diagram of a structure of a multi-turn session inference apparatus according to an embodiment of this application;
FIG. 11 is a diagram of a structure of a compute device according to an embodiment of this application;
FIG. 12 is a diagram of a compute device cluster according to an embodiment of this application; and
FIG. 13 is a diagram of a possible implementation of a compute device cluster according to an embodiment of this application.

### DESCRIPTION OF EMBODIMENTS

To make objectives, technical solutions, and advantages of this application clearer, the following further describes implementations of this application in detail with reference to the accompanying drawings.

First, this application relates to application of a generative large model based on a transformer architecture in multi-turn session inference. For ease of understanding content of embodiments of this application, the following describes several technical terms in embodiments of this application.

A token (token) is a minimum semantic unit represented by a vector. The minimum semantic unit is, for example, a character, a letter, a word, or a phrase. A token sequence including a plurality of tokens is used as an input of the generative large model. In a multi-turn session inference scenario, the token sequence input to the generative large model is a question prompt of a session. The generative large model performs inference on the input token sequence, and obtains subsequent tokens of the question prompt one by one through a plurality of iterations until a complete subsequent token sequence is obtained or an inference terminator appears. The generative large model outputs the generated token sequence, and the generated token sequence is an answer to the question prompt. For example, the input token sequence of the generative large model is X[1:s]. The generative large model performs a 1^{st} iteration based on the token sequence X[1:s] to obtain an (s+1)^{th} token: token[s+1]; the generative large model performs a 2^{nd} iteration based on X[1:s] and token[s+1] to obtain an (s+2)^{th} token: token[s+2]; and the rest may be deduced by analogy, until the complete token sequence is obtained or the inference terminator appears. The generative large model outputs the token sequence obtained through inference, that is, outputs the answer, to complete a turn of dialog inference, where s is an integer greater than 1.

The generative large model based on the transformer architecture includes N transformer layers, where N is an integer greater than 1. Each transformer layer includes a self-attention (self-attention) mechanism and a feedforward neural network (feedforward neural network, FFN).

One-turn session inference means that in each iteration, the N transformer layers of the generative large model sequentially process a token sequence input in a current iteration to obtain one token. A process of processing the input token sequence by using an i^{th} layer of the generative large model includes: separately projecting each token in the input of the current iteration with a model parameter corresponding to the self-attention mechanism at the i^{th} layer to generate intermediate data: a key (key) and a value (value), corresponding to each token; performing non-linear transformation on the key and the value, where the non-linear transformation is, for example, residual connection and normalization, and transferring a result of the non-linear transformation to the feedforward neural network at the i^{th} layer; and processing, by the feedforward neural network at the i^{th} layer, the result of the non-linear transformation to obtain a processing result of the i^{th} layer, and transferring the processing result of the i^{th} layer to an (i+1)^{th} layer for processing, where i is an integer greater than or equal to 1 and less than N. The foregoing process of processing the input token sequence by using the i^{th} layer of the generative large model to obtain the processing result of the i^{th} layer is i^{th}-layer computing.

The multi-turn session inference means that to maintain semantic consistency of a session context and ensure accurate understanding of an input of a current session, when generating an answer of the current session, the generative large model refers to inputs and outputs of historical sessions with a same object, that is, an input of a turn of a multi-turn session includes an input token sequence in the historical sessions, an output token sequence in the historical sessions, and a token sequence input by the object in the turn of the session.

A key-value cache (KV cache) means that in an iteration of the generative large model (that is, a process of generating a token), when processing any token, the generative large model generates corresponding intermediate data: a key and a value, and the generated intermediate data is used in a subsequent iteration. In addition, when a multi-turn session occurs, the input and output token sequences of the historical session are used in each turn of the session. In this way, intermediate data corresponding to input and output tokens of the historical session is also used. Therefore, to save compute resources and improve inference efficiency, the intermediate data corresponding to the input and output tokens of the historical session is stored, to form a historical KV cache of the session. In this way, the historical KV cache of the session can be directly reused for inference during session inference, and recomputation is not required.

A prefilling phase is a 1^{st} iteration in a one-turn session inference process. In the prefilling phase, the generative large model performs the 1^{st} iteration based on the input token sequence X[1:s] of the session, to obtain token[s+1], and stores a key and a value that are obtained in the iteration and that correspond to each token in X[1:s], to form KV cache[1:s].

A decoding phase is from a 2^{nd} iteration to a last iteration in the one-turn session inference process. In any iteration of the decoding phase, the generative large model calculates a key and a value that correspond to a token obtained in a previous iteration, reads a stored historical KV cache, obtains, based on a key and a value that are obtained through computing of a current iteration and the historical KV cache, a token obtained in the current iteration, and stores the key and the value that are obtained through computing of the current iteration, that is, updates the historical KV cache.

A context window (context window) means a quantity of tokens that can be processed simultaneously by the generative large model.

An accelerator stream (stream) is an abstraction unit for an accelerator to execute parallel computing jobs.

An execution buffer (execution buffer) is a region that is in a high-bandwidth memory (high-bandwidth memory, HBM) and that is used to store a KV cache that can be currently processed by an accelerator inference computing stream.

The foregoing describes several technical terms in embodiments of this application. The following describes an implementation environment of embodiments of this application.

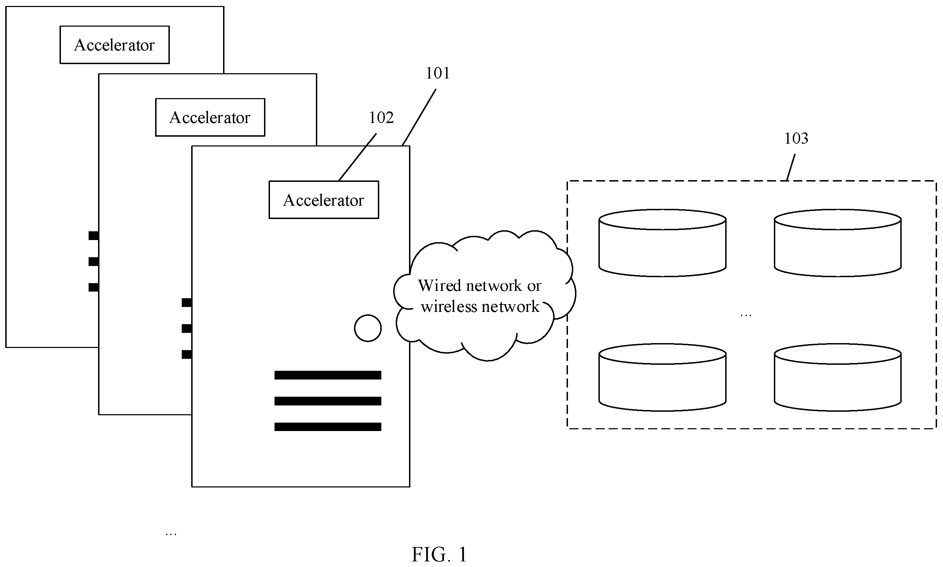

FIG. 1 is a diagram of a structure of a computing system according to an embodiment of this application. As shown in FIG. 1, the computing system includes a host 101, an accelerator 102 of the host, and an external storage device 103. The host 101, the accelerator 102, and the external storage device 103 communicate with each other through a wired network or a wireless network.

The computing system can be deployed on a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

The external storage device 103 is, for example, a solid state drive (solid state drive, SSD) or a hard disk drive (hard disk drive, HDD), or a cloud storage service such as an object storage service (object storage service, OBS), an elastic volume service (elastic volume service, EVS), or a scalable file service (scalable file service, SFS). A type of the external storage device 103 is not limited in embodiments of this application. For example, in a multi-level storage system, the external storage device 103 is configured to store a historical KV cache of a session.

The host 101 is, for example, a host of a compute device, and is, for another example, a primary compute device configured to control and manage another compute device in the compute device cluster. A memory of the host 101 is, for example, a dynamic random access memory (dynamic random access memory, DRAM). For example, a job scheduler runs on the host 101, the job scheduler maintains a job queue, and the job queue indicates a to-be-processed session of the accelerator. The memory of the host 101 is configured to store a historical KV cache of the to-be-processed session in the job queue. The host 101 is configured to load the historical KV cache of the to-be-processed session in the job queue from the external storage device 101 to the memory of the host 101 based on the job queue.

The accelerator 102 is, for example, a general-purpose central processing unit (central processing unit, CPU), a graphics processing unit (graphics processing unit, GPU), a switching module processor unit (switching module processor unit, SMPU), a network processor unit (network processor unit, NPU), or a microprocessor. For another example, the accelerator 102 is one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. A type of the accelerator is not limited in embodiments of this application. For example, the HBM in the accelerator 102 is configured to store a historical KV cache of a first session. The accelerator 102 can perform inference on the first session in the job queue by using the generative large model, that is, perform i^{th}-layer computing of the generative large model, to generate an answer to the first session. The first session is a turn of a multi-turn session. When performing i^{th}-layer computing, the accelerator 102 reuses a historical KV cache, in the HBM in the accelerator 102, that is of an input of the first session and that is at an i^{th} layer, and loads, from the memory to the HBM, a historical KV cache of the first session at an (i+1)^{th} layer when performing i^{th}-layer computing.

In some embodiments, each compute device in the compute device cluster includes the host 101, the accelerator 102, and the external storage device 103, that is, a storage device configured for each compute device is used as the external storage device 103. In some other embodiments, each compute device in the compute device cluster includes the host 101 and the accelerator 102, and at least one compute device that has a storage capability in the compute cluster is used as the external storage device 103. This is not limited in embodiments of this application.

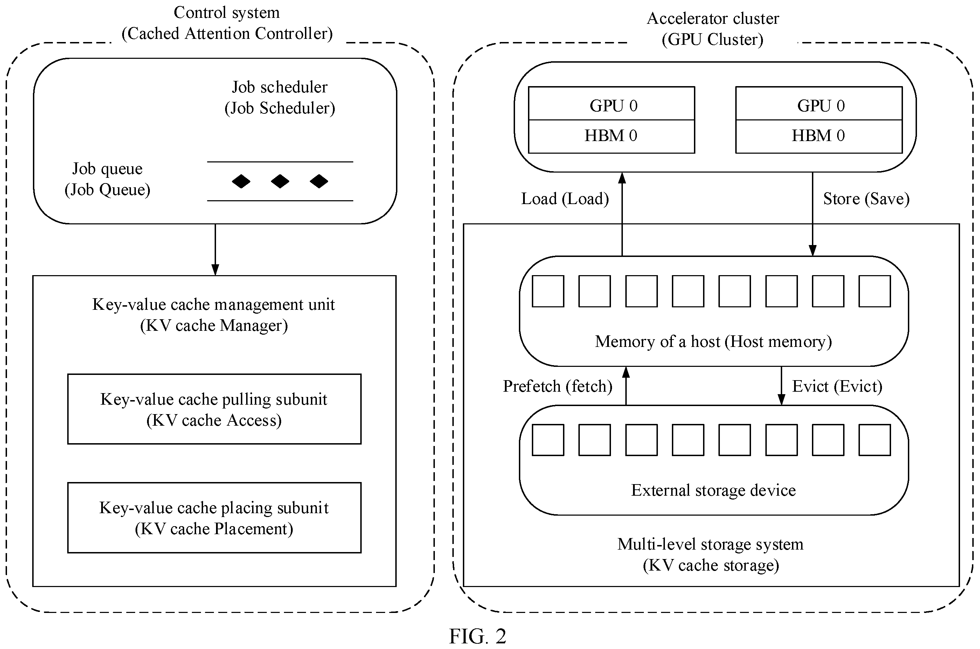

For example, FIG. 2 is a diagram of functions of a computing system according to an embodiment of this application. As shown in FIG. 2, the computing system includes a control system and a multi-level storage system. The multi-level storage system includes the memory of the host 101, the HBM in the accelerator 102, and the external storage device 103. The control system runs on the host 101 and the accelerator 102, and the control system includes a job scheduler and a key-value cache management unit. The job scheduler maintains a job queue. The job queue indicates a to-be-processed session of the accelerator. The key-value cache management unit is configured to control data migration between the memory of the host 101 and the external storage device 103. Specifically, the key-value cache management subunit includes a key-value cache pulling subunit and a key-value cache placing subunit. The key-value cache pulling subunit is configured to: pre-pull a historical KV cache of the to-be-processed session in the job queue to the memory of the host 101, and load a KV cache in the memory of the host 101 to the HBM in the accelerator. The key-value cache placement subunit is configured to: when available storage space of the memory of the host 101 is insufficient, evict the KV cache from the memory of the host 101 to the external storage device 103, and store (write back), in the host, a KV cache generated by the accelerator processing the session. It should be noted that division of functional modules of the computing system shown in FIG. 2 is merely an example, and a manner of dividing the functional modules of the computing system is not limited in embodiments of this application.

In some embodiments, the foregoing wireless network or wired network uses a standard communication technology and/or protocol. Networks are usually a transmission control protocol/internet protocol (transmission control protocol/internet protocol, TCP/IP) network and an RDMA network in a data center network, for example, an RDMA over converged Ethernet (RDMA over converged Ethernet, RoCE) or an infinite bandwidth (InfiniBand, IB) network. This is not limited herein. In some other embodiments, customized and/or dedicated data communication technologies can alternatively be used to replace or supplement the foregoing data communication technology.

The following describes a multi-turn session inference method provided in an embodiment of this application. The method is applied to the foregoing computing system. In the method, an external storage device stores a historical KV cache of a completed session. Because capacity of the external storage device is far greater than capacity of an HBM in an accelerator, the external storage device can store a large quantity of historical KV caches, to improve a hit rate of the historical KV caches, thereby avoiding KV cache recomputation, improving multi-turn session inference efficiency, and saving compute resources. In addition, when the accelerator processes a session, the host can preload a historical KV cache of a to-be-processed session in a job queue from the external storage device to the memory of the host. When performing i^{th}-layer computing of a generative large model on the session, the accelerator can preload, from the memory of the host to the accelerator, a historical KV cache required by (i+1)^{th}-layer computing. Because a computing process and a data loading process are synchronously performed, there is no need for the computing process to wait for completion of data loading. In this way, time overheads of accessing the external storage device by the accelerator can be hidden, and the multi-turn session inference efficiency is improved.

The foregoing method relates to a data migration process between the accelerator and the memory of the host and a data migration process between the memory of the host and the external storage device that are in a multi-turn session inference process. The following describes the two data migration processes.

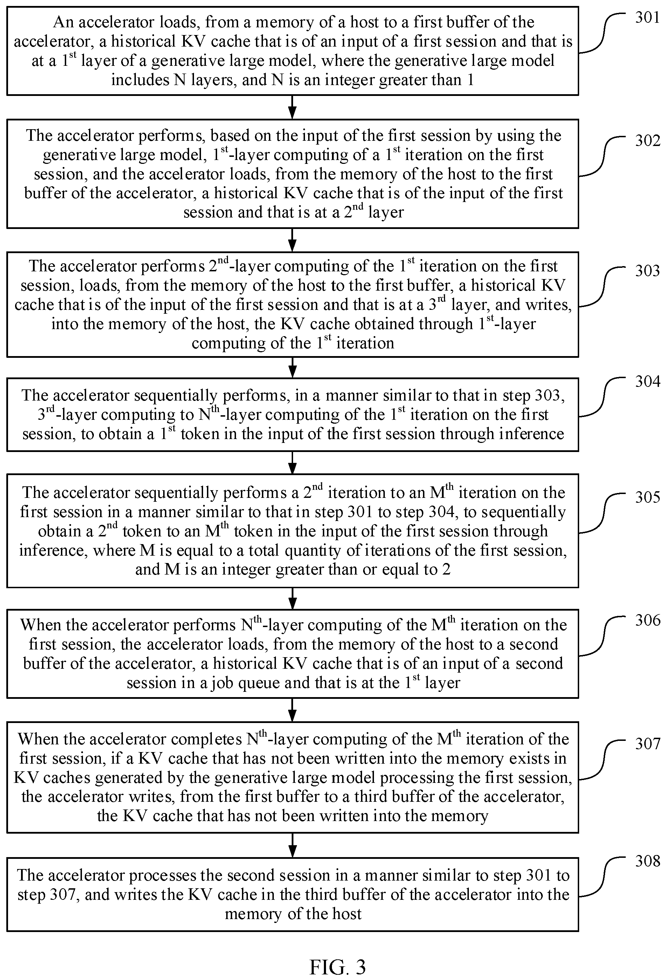

The data migration process between the accelerator and the memory of the host is first described. FIG. 3 is a flowchart of a multi-turn session inference method according to an embodiment of this application. As shown in FIG. 3, the method is applied to a computing system. The computing system includes a host, an accelerator of the host, and an external storage device. The method includes the following step 301 to step 308.

Step 301: The accelerator loads, from a memory of the host to a first buffer of the accelerator, a historical KV cache that is of an input of a first session and that is at a 1^{st} layer of a generative large model, where the generative large model includes N layers, and N is an integer greater than 1.

The first session is a turn of a multi-turn session initiated by a first object. The input of the first session includes an input token sequence of historical sessions of the first session, an output token sequence of the historical sessions, and a token sequence input by an object in the first session. A multi-turn session initiated by a same object have a same session window identifier. The historical sessions of the first session are completed sessions that have a same session window identifier as the first session. For example, the first object initiates three turns of sessions, a first turn of session and a second turn of session have been completed, and the first session is a third turn of session. In the first turn of session, an input token sequence is Q1, and an output token sequence is A1. In the second turn of session, an input token sequence is Q2, and an output token sequence is A2. In the third turn of session, an input token sequence is Q3, and the input of the first session is [Q1 A1 Q2 A2 Q3].

The historical KV cache that is of the input of the first session and that is at the 1^{st} layer is a KV cache that is in historical KV caches of the first session and that is associated with the 1^{st} layer. The first buffer is a region that is in the HBM in the accelerator and that is used to store a KV cache that can be currently processed by the accelerator, that is, an execution buffer of the accelerator.

Before the accelerator performs 1^{st}-layer computing of a 1^{st} iteration of the first session, the accelerator starts a data reading thread, and loads, from the memory of the host to the first buffer by using the data reading thread, the historical KV cache that is of the input of the first session and that is at the 1^{st} layer. In the foregoing method, before 1^{st}-layer computing occurs, the data read thread is used to make data required by 1^{st}-layer computing ready in the first buffer of the accelerator, so that a time interval caused by loading the data from the memory of the host can be avoided, thereby improving inference efficiency.

The historical KV cache is a multi-dimensional vector with a variable length. The historical KV caches may be stored at different granularities. For example, in some embodiments, the historical KV caches are stored at a granularity of a turn of session, that is, intermediate key and value data, obtained by the generative large model processing a plurality of sessions, is stored as a plurality of KV caches based on the sessions, and each KV cache has a session identifier. For another example, in some other embodiments, the historical KV caches are stored at a granularity of a layer of the generative large model, that is, intermediate key and value data, obtained through a plurality of layers of the generative large model, is stored as a plurality of KV caches based on the layers, and each KV cache has a session identifier and a layer identifier. For still another example, in some other embodiments, the historical KV caches are stored at a granularity of a multi-turn session, that is, intermediate key and value data, obtained by the generative large model processing the multiple turns of the session initiated by a same object, is stored as one KV cache. It should be noted that the foregoing description of the storage granularity of the historical KV cache is merely an example, and the storage granularity of the KV cache is not limited in embodiments of this application.

The historical KV cache that is of the input of the first session and that is at the 1^{st} layer is irrelevant to positional encoding of the input of the first session. Irrelevance means that the positional encoding of the input of the first session does not affect the historical KV cache of the first session.

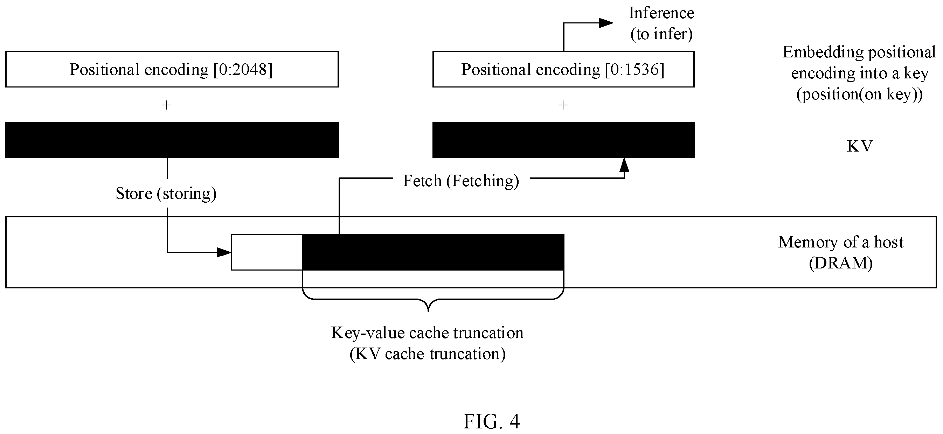

In some embodiments, a quantity of tokens included in the input of the first session is greater than a quantity of tokens that can be accommodated by a context window of the generative large model. The accelerator loads, from the memory of the host, a historical KV cache of a first sub-input at the 1^{st} layer. The first sub-input is a sub-input of the input of the first session, and a quantity of tokens included in the first sub-input is less than the quantity of tokens that can be accommodated by the context window. This process may be understood as follows: When the input of the first session causes the context window to overflow, the input of the first session is truncated, to discard first few tokens in the input of the first session, and the first sub-input of the first session is used as the input of the generative large model. Correspondingly, the accelerator loads the historical KV cache corresponding to the first sub-input from the memory of the host. In other words, the KV cache is directly truncated after the context window overflows. The following uses FIG. 4 as an example to describe the foregoing loading process. FIG. 4 is a diagram of directly truncating a KV cache after a context window overflows according to an embodiment of this application. As shown in FIG. 4, the memory of the host stores the historical KV cache that is of the input of the first session and that is at the 1^{st} layer, and the positional encoding of the input of the first session is [0:2048]. When the input of the first session causes the context window to overflow, the accelerator loads, from the memory of the host, the historical KV cache that is of the first sub-input of the first session and that is at the 1^{st}-layer. Positional encoding of the first sub-input is [0:1536], and the accelerator embeds the positional encoding of the first sub-input into the historical KV cache of the first sub-input at the 1^{st} layer, and performs subsequent inference based on the historical KV cache embedded with the positional encoding. That the accelerator embeds the positional encoding into the historical KV cache means that the accelerator embeds the positional encoding into a key in the historical KV cache.

In the foregoing embodiment, the stored KV cache is decoupled from the positional encoding. When the context window overflows, a change in the positional encoding of the input of the generative large model does not lead to a failure of the stored KV cache. Therefore, the accelerator can reuse the truncated historical KV cache of the input, thereby avoiding KV cache recomputation caused by the overflow of the context window, improving the inference efficiency, and saving compute resources.

It should be noted that the historical KV cache of the first session is stored in the external storage device. Before the accelerator performs inference on the first session by using the generative large model, the host preloads the historical KV cache of the first session from the external storage device to the memory of the host, and the accelerator loads, from the memory of the host, the historical KV cache that is of the input of the first session and that is at the 1^{st} layer. A data migration process between the external storage device and the memory of the host is described in a subsequent embodiment. Details are not described herein.

Step 302: The accelerator performs, based on the input of the first session by using the generative large model, 1^{st}-layer computing of the 1^{st} iteration on the first session, and the accelerator loads, from the memory of the host to the first buffer of the accelerator, a historical KV cache that is of the input of the first session and that is at a 2^{nd} layer.

The accelerator starts a computing thread, and performs 1^{st}-layer computing of the 1^{st} iteration on the first session by using the computing thread.

When the quantity of tokens included in the input of the first session is less than the quantity of tokens that can be accommodated by the context window of the generative large model, that is, when the context window does not overflow, a process in which the accelerator performs 1^{st}-layer computing of the 1^{st} iteration on the first session by using the generative large model includes: separately projecting input token sequences of the first session with model parameters corresponding to a self-attention mechanism at the 1^{st} layer to generate intermediate data: a key and a value, corresponding to each token in the input token sequence of the first session; updating, based on the key and the value that are of the input token sequence of the first session and that are at the 1^{st} layer, the historical KV cache that is of the input of the first session and that is at the 1^{st} layer; embedding the positional encoding of the input of the first session into the updated historical KV cache, where the positional encoding is relative positional encoding (relative positional encoding, RPE); performing non-linear transformation on the key and the value in the historical KV cache embedded with the positional encoding, where the non-linear transformation includes residual connection and normalization, and transferring a result of the non-linear transformation to a feedforward neural network at the 1^{st} layer; and processing, by the feedforward neural network at the 1^{st} layer, the result of the non-linear transformation to obtain a computing result of the 1^{st} layer. That the accelerator updates, based on the key and the value that are of the input token sequence of the first session and that are at the 1^{st} layer, the historical KV cache that is of the input of the first session and that is at the 1^{st} layer means that each time intermediate data: the key or the value, is obtained through computing by using the computing thread of the accelerator, the intermediate data is appended to the historical KV cache, in the first buffer, that is of the input of the first session and that is at the 1^{st} layer.

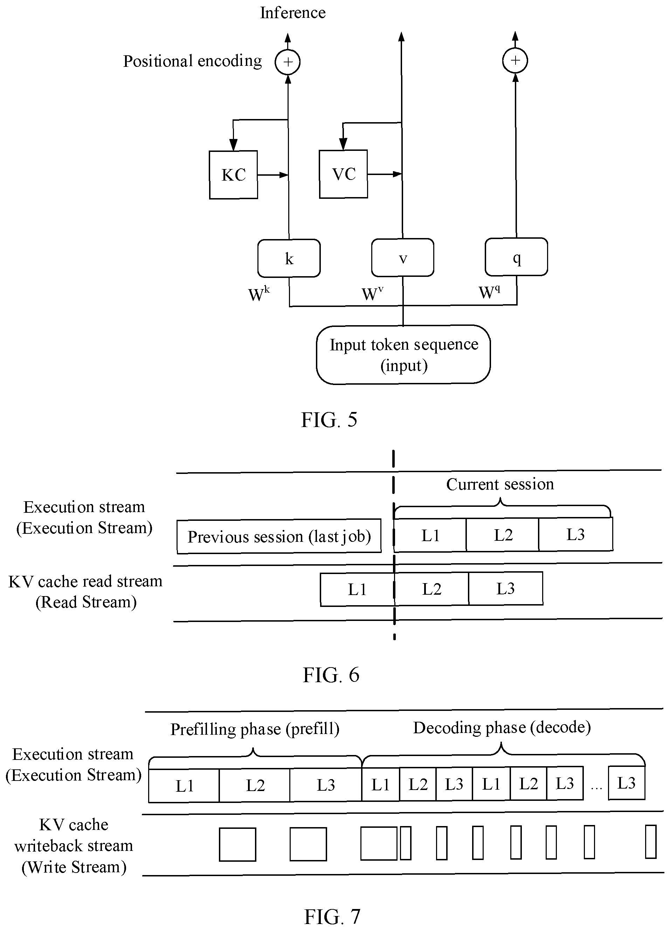

The following uses FIG. 5 as an example to describe the foregoing 1^{st}-layer computing process. FIG. 5 is a diagram of performing inference based on a KV cache decoupled from positional encoding according to an embodiment of this application. As shown in FIG. 5, the accelerator separately projects the input token sequences (input) of the first session with the model parameters (W^{k} and W^{v}) corresponding to the self-attention mechanism at the 1^{st} layer to generate the intermediate data: the key and the value, corresponding to each token in the input token sequence of the first session. The accelerator updates the historical KV cache. The accelerator embeds the positional encoding of the input of the first session into the key in the updated historical KV cache, and performs subsequent inference based on the KV cache embedded with the positional encoding.

When the quantity of tokens included in the input of the first session is greater than or equal to the quantity of tokens that can be accommodated by the context window of the generative large model, that is, when the context window overflows, the accelerator performs, based on the first sub-input of the first session by using the generative large model, 1^{st}-layer computing of the 1^{st} iteration on the first session. The computing process is similar to the computing process when the context window does not overflow. A difference lies in that when the context window overflows, the input of the generative large model and the historical KV cache loaded by the accelerator from the memory of the host are truncated. Details are not described again.

A process in which the accelerator loads, from the memory of the host to the first buffer, the historical KV cache that is of the input of the first session and that is at the 2^{nd} layer is similar to the process in which the accelerator loads the historical KV cache at the 1^{st} layer in step 301. Details are not described again.

Step 303: The accelerator performs 2^{nd}-layer computing of the 1^{st} iteration on the first session, loads, from the memory of the host to the first buffer, a historical KV cache that is of the input of the first session and that is at a 3^{rd} layer, and writes, into the memory of the host, the KV cache obtained through 1^{st}-layer computing of the 1^{st} iteration.

The accelerator performs 2^{nd}-layer computing of the 1^{st} iteration on the first session by using the computing thread. In addition, the accelerator loads, from the memory of the host by using the data reading thread, the historical KV cache that is of the input of the first session and that is at the 3^{rd} layer, and the accelerator writes, from the first buffer to the memory of the host by using a data writeback thread, the KV cache obtained through 1^{st}-layer computing of the 1^{st} iteration.

The accelerator performs, by using the computing thread, 2^{nd}-layer computing of the 1^{st} iteration on the first session based on a computing result obtained by performing 1^{st}-layer computing of the 1^{st} iteration on the first session. A 2^{nd}-layer computing process is similar to a 1^{st}-layer computing process. Details are not described again.

A process in which the accelerator loads, from the memory of the host to the first buffer by using the data reading thread, the historical KV cache that is of the input of the first session and that is at the 3^{rd} layer is similar to the process in which the accelerator loads the historical KV cache at the 1^{st} layer in step 301. Details are not described again.

In step 303, when the computing thread of the accelerator is performing computing at a layer, the data reading thread of the accelerator simultaneously starts to load a KV cache at a subsequent layer to the first buffer. After computing at the current layer is completed, the computing thread can immediately start computing at the subsequent layer based on loaded data. This hides a time interval caused by loading data required by a next layer between two adjacent layers, thereby improving the session inference efficiency. In addition, when the computing thread of the accelerator is performing computing at a layer, the data writeback thread of the accelerator simultaneously writes back a KV cache generated at a previous layer to the memory of the host. In comparison with that after one iteration is completed, a KV cache generated in the current iteration is written into the memory of the host, a time interval caused by writing back data generated in a previous iteration between two adjacent iterations can be hidden, and the inference efficiency can be improved.

Step 304: The accelerator sequentially performs, in a manner similar to that in step 303, 3^{rd}-layer computing to N^{th}-layer computing of the 1^{st} iteration on the first session, to obtain a 1^{st} token in an output of the first session through inference.

The foregoing step 301 to step 304 describe a process of performing the 1^{st} iteration on the first session. The 1^{st} iteration is a prefilling phase in an inference process of the first session. After the prefilling phase, the 1^{st} token in the output of the first session is obtained through inference. The following describes a decoding phase in the inference process of the first session by using step 305. The decoding phase includes at least one iteration, and one token in the output of the first session is obtained through inference in each iteration.

Step 305: The accelerator sequentially performs a 2^{nd} iteration to an M^{th} iteration on the first session in a manner similar to that in step 301 to step 304, to sequentially obtain a 2^{nd} token to an M^{th} token in the output of the first session through inference, where M is equal to a total quantity of iterations of the first session, and M is an integer greater than or equal to 2.

Any iteration from the 2^{nd} iteration to the M^{th} iteration is similar to the 1^{st} iteration. A difference lies in that in the 1^{st} iteration, each-layer computing generates the intermediate data: the key and the value, corresponding to each token in the input token sequence of the first session (a question prompt of the first session), and in the any iteration from the 2^{nd} iteration to the M^{th} iteration, each-layer computing generates intermediate data: a key and a value, corresponding to a token obtained in a previous iteration. Similarities are not described again.

Step 306: When the accelerator performs N^{th}-layer computing of the M^{th} iteration on the first session, the accelerator loads, from the memory of the host to a second buffer of the accelerator, the historical KV cache that is of the input of the second session in a job queue and that is at the 1^{st} layer.

The job queue indicates to-be-processed sessions. The second session is a 1^{st} to-be-processed session in the job queue. The second buffer is a region that is in the HBM in the accelerator and that is used to store a KV cache to be processed by the accelerator, that is, used to store the historical KV cache that is of the input of the second session and that is at the 1^{st} layer.

The accelerator loads, from the memory of the host to the second buffer by using the data reading thread, the historical KV cache that is of the input of the second session and that is at the 1^{st} layer.

In the foregoing method, the HBM in the accelerator includes the first buffer and the second buffer. The first buffer is configured to store the KV cache of the session currently being processed by the accelerator, and the second buffer is configured to store the KV cache of the session to be processed by the accelerator. When processing the first session based on the KV cache in the first buffer, the accelerator loads, to the second buffer, a KV cache that is of the second session and that is required by 1^{st}-layer computing. After completing processing of the first session, the accelerator processes the second session based on the KV cache in the second buffer. In this case, the second buffer becomes an execution buffer. When processing the second session, the accelerator releases the first buffer by using an asynchronous thread, so that the computing thread of the accelerator can immediately start to process the second session after completing processing of the first session, without waiting for completion of the release of the first buffer. Therefore, a time interval between the two sessions caused by loading data required by a next session is hidden, and the inference efficiency is improved.

It should be noted that step 306 is an optional step. In some embodiments, the accelerator includes only the first buffer. After completing N^{th}-layer computing of the M^{th} iteration of the first session, the accelerator releases the first buffer, and loads, to the first buffer, the historical KV cache that is of the input of the second session and that is at the 1^{st} layer. This is not limited in embodiments of this application. In the foregoing embodiment, all HBMs in the accelerator are used as first buffers, so that capacity of the first buffers can be increased. When a data amount of historical KV caches of sessions is large, complete historical KV caches of the sessions can be accommodated, and a case in which a historical KV cache that is loaded later overwrites a historical KV cache that is loaded earlier due to insufficient capacity can be avoided. Therefore, a hit rate of the historical KV caches in the first buffer can be improved, and repeated loading of the historical KV cache can be avoided.

Step 307: When the accelerator completes N^{th}-layer computing of the M^{th} iteration of the first session, if a KV cache that has not been written into the memory exists in KV caches generated by the generative large model processing the first session, the accelerator writes, from the first buffer to a third buffer of the accelerator, the KV cache that has not been written into the memory.

The KV caches generated by the generative large model processing the first session are stored in the first buffer. When the accelerator performs (i+1)^{th}-layer computing by using the computing thread, the data writeback thread of the accelerator writes, from the first buffer back to the memory of the host, a KV cache generated through i^{th}-layer computing, where i is an integer greater than or equal to 1 and less than N. The third buffer is a region that is in the HBM in the accelerator and that is used to store the KV cache that has not been written back.

In the foregoing method, the HBM in the accelerator further includes the third buffer. After completing processing of the first session, the accelerator writes, from the first buffer to the third buffer, the KV cache that is generated in a process of processing the first session and that has not been written back to the memory. Because efficiency of copying data between the first buffer and the third buffer is high, after completing processing of the first session, the accelerator can quickly write, into the third buffer, the KV cache that is in the first buffer and that has not been written back into the memory, to quickly release the first buffer, so that a KV cache required by subsequent processing can be loaded to the first buffer, instead of releasing the first buffer after waiting for all the KV caches generated by processing the first session to be written into the memory. This hides a time interval that is between two sessions and that is caused by waiting for writeback of data of a previous session, and improves the inference efficiency.

It should be noted that step 307 is an optional step. In some embodiments, the accelerator includes only the first buffer. After completing N^{th}-layer computing of the M^{th} iteration of the first session, the accelerator releases the first buffer after waiting for all the KV caches generated by processing the first session to be written from the first buffer to the memory of the host. In the foregoing embodiment, all the HBMs in the accelerator are used as the first buffers, so that the capacity of the first buffers can be increased. When the data amount of the historical KV caches of the sessions is large, the complete historical KV caches of the sessions can be accommodated, and the case in which the historical KV cache that is loaded later overwrites the historical KV cache that is loaded earlier due to the insufficient capacity can be avoided. Therefore, the hit rate of the historical KV caches in the first buffer can be improved, and repeated loading of the historical KV cache can be avoided.

Step 308: The accelerator processes the second session in a manner similar to step 301 to step 307, and writes the KV cache in the third buffer of the accelerator into the memory of the host.

A process in which the accelerator writes the KV cache in the third buffer into the memory of the host in step 308 is similar to a process in which the accelerator writes the KV cache obtained through 1^{st}-layer computing of the 1^{st} iteration into the memory of the host in step 303. Details are not described again.

In the foregoing method, when performing i^{th}-layer computing of the generative large model on the session, the accelerator can preload, from the memory of the host to the accelerator, a historical KV cache required by (i+1)^{th}-layer computing. Because the computing process and the data loading process are synchronously performed, there is no need for the computing process to wait for completion of data loading. In this way, time overheads of accessing the external storage device by the accelerator can be hidden, and the multi-turn session inference efficiency is improved. Further, when performing (i+1)^{th}-layer computing, the accelerator writes the KV cache generated through i^{th}-layer computing back to the memory of the host. In comparison with that after inference of a turn of session is completed, a KV cache generated in the current turn of session is written into the memory of the host, a time interval that is between two adjacent turns of sessions and that is caused by writeback of data generated in a previous turn of session can be hidden, thereby improving the inference efficiency.

The following uses, by using FIG. 6 and FIG. 7, the procedure shown in step 301 to step 308 as an example for description. FIG. 6 is a diagram in which a computing process and a data loading process are parallel in a multi-turn session inference method according to an embodiment of this application. As shown in FIG. 6, a generative large model includes three layers (L1, L2, and L3). After processing of a previous session is completed, an accelerator processes a current session by using the generative large model. Before L1-layer computing occurs, a KV cache required by the layer is ready in a first buffer in an HBM in the accelerator. A data loading thread, that is, a KV cache read stream, of the accelerator loads, to the first buffer, the KV cache required by L1-layer computing. A computing thread, that is, an execution stream, of the accelerator starts to perform L1-layer computing. When the computing thread of the accelerator is performing L1-layer computing, the data loading thread simultaneously starts to load a KV cache required by L2-layer computing to the first buffer. The rest may be deduced by analogy. In this way, time for loading the KV cache from a memory of the host by the accelerator overlaps with computing time, so that time overheads of loading the KV cache from the memory of the host can be hidden, thereby significantly improving inference efficiency.

FIG. 7 is a diagram in which a computing process and a data writeback process are parallel in a multi-turn session inference method according to an embodiment of this application. As shown in FIG. 7, a generative large model includes three layers (L1, L2, and L3). In a prefilling phase, a computing thread, that is, an execution stream, of an accelerator performs L1-layer computing. After the computing thread of the accelerator completes L1-layer computing, the computing thread of the accelerator performs L2-layer computing. In addition, a data writeback thread, that is, a KV cache writeback stream, of the accelerator writes, from a first buffer back to a memory of the host, a KV cache generated through L1-layer computing. After the computing thread of the accelerator completes L2-layer computing, the computing thread of the accelerator performs L3-layer computing. In addition, the data writeback thread of the accelerator writes, from the first buffer back to the memory of the host, a KV cache generated through L2-layer computing. The rest may be deduced by analogy. A data writeback process in a decoding phase is similar to a data writeback process in the prefilling phase. Details are not described again. In the data writeback process shown in FIG. 7, time for writing the generated KV cache back to the memory of the host by the accelerator overlaps computing time, so that time overheads of writing the generated KV cache back to the memory of the host can be hidden, thereby significantly improving inference efficiency.

The foregoing describes a data migration process between the accelerator and the memory of the host. The following describes a data migration process between the memory of the host and the external storage device.

The data migration process between the memory of the host and the external storage device includes: If a historical KV cache of a first to-be-processed session in the job queue does not exist in the memory of the host, the host loads the historical KV cache of the first to-be-processed session from the external storage device to the memory of the host. The first to-be-processed session is a first quantity of to-be-processed sessions at the head of the job queue.

A quantity of session turns included in the first to-be-processed session is determined based on capacity of the memory of the host, that is, the first quantity is determined based on the capacity of the memory of the host, where for example, the first quantity=available storage space of the memory of the host÷an average data amount of historical KV caches of the sessions. It should be noted that, for the historical KV cache of the first session that is being processed by the accelerator, when performing computing, the accelerator writes a newly generated KV cache back to the memory of the host, to update the historical KV cache of the first session in the memory of the host. Space used by the historical KV cache of the first session in the memory of the host is used by the system, and the space cannot be released before processing of the first session is completed, where consequently, the available storage space of the memory of the host=the capacity of the memory of the host-the space used by the system.

In some embodiments, if the available storage space of the memory of the host is sufficient, the host loads the historical KV cache of the first to-be-processed session from the external storage device to the memory of the host; and if the available storage space of the memory of the host is insufficient, the host writes a historical KV cache of a second to-be-processed session in the job queue from the memory of the host to the external storage device, and loads the historical KV cache of the first to-be-processed session from the external storage device to the memory of the host. The second to-be-processed session is a session in the job queue other than the first to-be-processed session.

Persons skilled in the art can determine, based on an actual requirement, how to determine whether the available storage space of the memory of the host is sufficient. For example, in some embodiments, if capacity of the available storage space of the memory of the host is greater than or equal to a target threshold, it indicates that the available storage space of the host is sufficient; and if the available storage space capacity of the memory of the host is less than the target threshold, it indicates that the available storage space of the host is insufficient. For another example, in some other embodiments, if capacity of the available storage space of the memory of the host is greater than or equal to a data amount of the historical KV cache of the first to-be-processed session, it indicates that the available storage space of the host is sufficient; and if the capacity of the available storage space of the memory of the host is less than the data amount of the historical KV cache of the first to-be-processed session, it indicates that the available storage space of the host is insufficient. It should be noted that the foregoing description of the manner of determining whether the available storage space of the memory of the host is sufficient is merely an example, and the determining manner is not limited in embodiments of this application.

In some embodiments, in addition to the available storage space of the memory of the host, the memory of the host further includes a fourth buffer. The fourth buffer is configured to: when the available storage space of the memory of the host is insufficient, store the historical KV cache loaded from the external storage device. In this embodiment, the memory of the host includes the fourth buffer, to ensure that there is sufficient migration space for migrating the KV cache from the external storage device to the memory of the host. Therefore, when the available storage space of the host is insufficient, the host can write, into the fourth buffer, the KV cache preloaded from the external storage device, without waiting for eviction of the KV cache in the memory of the host to the external storage device, thereby avoiding blocking caused by waiting for the memory of the host to evict the KV cache when the available storage space of the host is insufficient.

In some embodiments, if available storage space of the external storage device is insufficient, a historical KV cache of a third to-be-processed session in the job queue is deleted from the external storage device. The third to-be-processed session is a second quantity of to-be-processed sessions at a queue tail of the job queue. The second quantity may be determined based on an actual case. For example, the second quantity is 1 or 2. This is not limited in embodiments of this application.

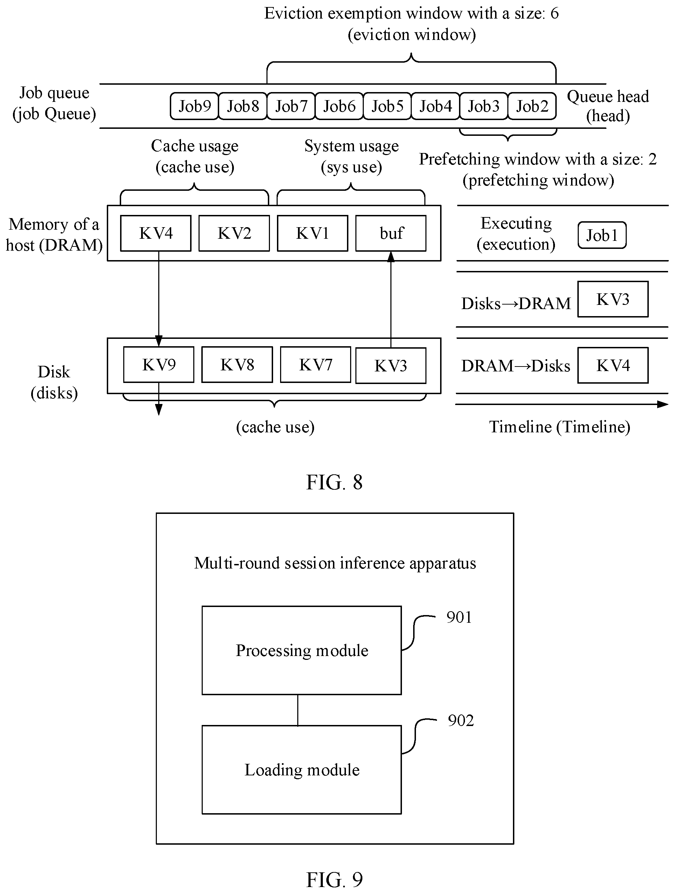

The following uses FIG. 8 as an example to describe the data migration process between the memory of the host and the external storage device. FIG. 8 is a diagram of a data migration process between a memory of the host and an external storage device in a multi-turn session inference process according to an embodiment of this application. As shown in FIG. 8, an accelerator is processing Job1, and Job1 is a first session. A job queue includes eight to-be-processed sessions, which are sequentially Job2 to Job9 from a queue head to a queue tail. The memory of the host includes a fourth buffer (a region indicated by "buf" in FIG. 8). In addition, the memory of the host stores historical KV caches of Job1, Job2, and Job4, which are: KV1, KV2, and KV4. The external storage device is a disk (disk) that stores historical KV caches of Job9, Job8, Job7, and Job3, which are: KV9, KV8, KV7, and KV3. A job scheduler in the host maintains a prefetching window (prefetching window). The prefetching window is used to determine a first quantity of to-be-processed sessions at the queue head of the job queue, that is, a first to-be-processed session. In FIG. 8, a size of the prefetching window is 2, indicating that the first to-be-processed session includes two turns of sessions, that is, the first quantity is 2. As shown in FIG. 8, the first to-be-processed session is Job2 and Job3. The job scheduler in the host further maintains an eviction exemption window (eviction exemption window). When available storage space of the external storage device is insufficient, a session indicated by the eviction exemption window is exempted from being deleted from the external storage device. In FIG. 8, a size of the eviction exemption window is 6. As shown in FIG. 8, in the first to-be-processed session (Job2 and Job3), the historical KV cache (KV2) of Job2 exists in the memory of the host, the historical KV cache (KV3) of Job3 does not exist in the memory of the host, and available storage space of the memory of the host is insufficient. The host loads KV3 from the disk to the fourth buffer of the memory of the host, and writes a historical KV cache of a second to-be-processed session in the job queue from the memory of the host into the disk. The historical KV cache of the second to-be-processed session exists in the memory of the host, and the second to-be-processed session is not the first to-be-processed session. That the second to-be-processed session is not the first to-be-processed session means that the second to-be-processed session is outside the prefetching window. In FIG. 8, the second to-be-processed session is Job4, and the host writes the historical KV cache (KV4) of Job4 into the disk from the memory of the host. Because the available storage space of the disk is insufficient, the host deletes a historical KV cache of a third to-be-processed session from the disk. The third to-be-processed session is a second quantity of sessions at the queue tail in the job queue outside the eviction exemption window. In FIG. 8, if a value of the second quantity is 1, the third to-be-processed session is Job9, and the host deletes the historical KV cache (KV9) of Job9 from the disk. It should be noted that FIG. 8 is merely an example of the data migration process between the memory of the host and the external storage device, and does not limit this application.

In the method, the external storage device stores a historical KV cache of a completed session. Because capacity of the external storage device is far greater than capacity of an HBM in the accelerator, the external storage device can store a large quantity of historical KV caches, to improve a hit rate of the historical KV caches, thereby avoiding KV cache recomputation, improving multi-turn session inference efficiency, and saving compute resources. In addition, when the accelerator processes a session, the host can preload a historical KV cache of a to-be-processed session in the job queue from the external storage device to the memory of the host. Because a computing process and a data loading process are synchronously performed, there is no need for the computing process to wait for completion of data loading. In this way, time overheads of accessing the external storage device by the accelerator can be hidden, and the multi-turn session inference efficiency is improved.

It should be noted that, to facilitate description of the multi-turn session inference method provided in embodiments of this application, two embodiments are used to separately describe the data migration process between the accelerator and the memory of the host and the data migration process between the memory of the host and the external storage device. However, this does not mean that the foregoing two embodiments are irrelevant to each other and separately occur. In other words, in the multi-turn session inference method provided in embodiments of this application, when data migration is performed between the accelerator and the memory of the host, data migration can also be performed between the memory of the host and the external storage device.

FIG. 9 is a diagram of a structure of a multi-turn session inference apparatus according to an embodiment of this application. The multi-turn session inference apparatus is used in an accelerator of a host in a computing system. The computing system further includes the host and an external storage device, the external storage device is configured to store a historical key-value cache KV cache of a session, the host is configured to load a historical KV cache of a to-be-processed session in a job queue from the external storage device to a memory of the host, and the apparatus includes a processing module 901 and a loading module 902.

The processing module 901 is configured to perform, based on the job queue, inference on a first session in the job queue by using a generative large model. The first session is a turn of a multi-turn session, and the generative large model includes N layers.

The loading module 902 is configured to: when i^{th}-layer computing is performed on the first session, load a historical KV cache that is of an input of the first session and that is at an (i+1)^{th} layer from the memory, where i is an integer greater than or equal to 1 and less than N.

In some embodiments, the historical KV cache that is of the input of the first session and that is at the (i+1)^{th} layer is irrelevant to positional encoding of the input of the first session.

In some embodiments, a quantity of tokens included in the input of the first session is greater than or equal to a quantity of tokens that can be accommodated by a context window of the generative large model.

The loading module 902 is configured to:
when performing i^{th}-layer computing on the first session, load, from the memory, a historical KV cache that is of a first sub-input and that is at the (i+1)^{th} layer. The first sub-input is a sub-input of the input of the first session, and a quantity of tokens included in the first sub-input is less than the quantity of tokens that can be accommodated by the context window.

In some embodiments, the processing module 901 includes:
an embedding unit, configured to embed positional encoding of the first sub-input into the historical KV cache that is of the first sub-input and that is at the (i+1)^{th} layer; and
a computing unit, configured to perform (i+1)^{th}-layer computing on the first session based on the input of the first session and the historical KV cache, embedded with the positional encoding, that is of the first sub-input and that is at the (i+1)^{th} layer.

In some embodiments, the accelerator includes a first buffer and a second buffer, the first buffer is configured to store a historical KV cache of the first session, the second buffer is configured to store a historical KV cache that is of an input of a second session in the job queue and that is at a 1^{st} layer, and the second session is a 1^{st} to-be-processed session after the first session in the job queue.

The loading module 902 is configured to:
when i^{th}-layer computing is performed on the first session, load, from the memory to the first buffer, the historical KV cache that is of the input of the first session and that is at the (i+1)^{th} layer.

In some embodiments, the loading module 902 is further configured to:
when N^{th}-layer computing is performed on the first session, load, from the memory to the second buffer, the historical KV cache that is of the input of the second session and that is at the 1^{st} layer.

In some embodiments, the apparatus further includes:
a writing module, configured to: when (i+1)^{th}-layer computing is performed on the first session, write a KV cache generated by performing i^{th}-layer computing on the first session into the memory.

In some embodiments, the accelerator includes a third buffer, and the third buffer is configured to store a KV cache generated by the generative large model processing the first session.

The writing module is configured to:
when N^{th}-layer computing on the first session is completed, if a KV cache that has not been written into the memory exists in KV caches generated by the generative large model processing the first session, write, into the third buffer, the KV cache that has not been written into the memory; and
when the second session in the job queue is processed by using the generative large model, write the KV cache in the third buffer into the memory.

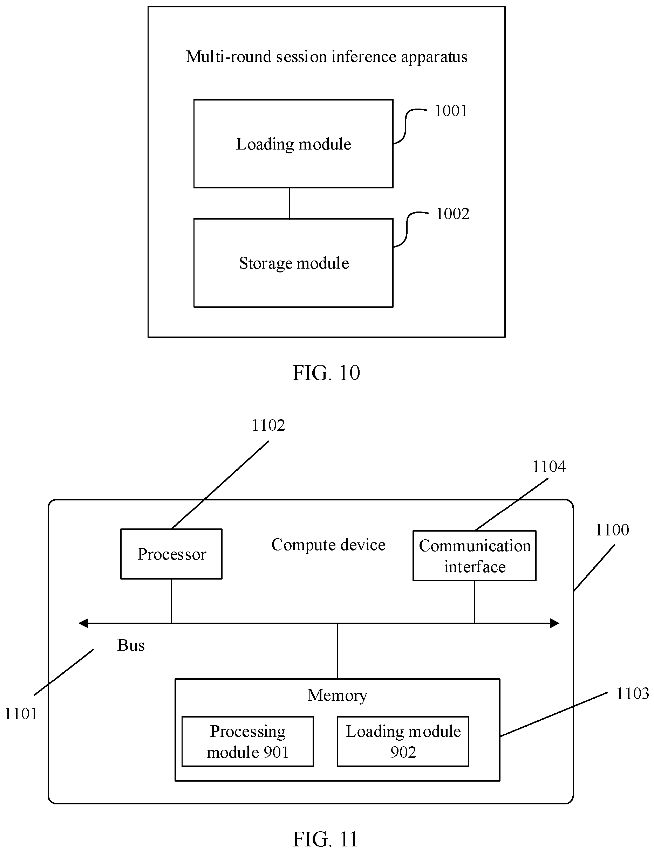

FIG. 10 is a diagram of a structure of a multi-turn session inference apparatus according to an embodiment of this application. The multi-turn session inference apparatus is used in a host in a computing system. The computing system further includes an accelerator of the host and an external storage device, the external storage device is configured to store a historical key-value cache KV cache of a session, the accelerator is configured to perform, based on a job queue, inference on a first session in the job queue by using a generative large model, the first session is a turn of a multi-turn session, and the generative large model includes N layers. When i^{th}-layer computing is performed on the first session, a historical KV cache that is of an input of the first session and that is at an (i+1)^{th} layer is loaded from a memory, and i is an integer greater than or equal to 1 and less than N. The apparatus includes a loading module 1001 and a storage module 1002.

The loading module 1001 is configured to load a historical KV cache of a to-be-processed session in the job queue from the external storage device to the memory of the host.

The storage module 1002 is configured to store the historical KV cache of the to-be-processed session.

In some embodiments, the loading module 1001 includes:
a loading unit, configured to: if a historical KV cache of a first to-be-processed session in the job queue does not exist in the memory, load the historical KV cache of the first to-be-processed session from the external storage device to the memory. The first to-be-processed session is a first quantity of to-be-processed sessions at the head of the job queue.

In some embodiments, a quantity of session turns included in the first to-be-processed session is determined based on capacity of the memory.

In some embodiments, the loading unit is configured to:
if available storage space of the memory is sufficient, load the historical KV cache of the first to-be-processed session from the external storage device to the memory; and
if the available storage space of the memory is insufficient, write a historical KV cache of a second to-be-processed session in the job queue from the memory into the external storage device, and load the historical KV cache of the first to-be-processed session from the external storage device to the memory. The second to-be-processed session is a session in the job queue other than the first to-be-processed session.

In some embodiments, the apparatus further includes a deletion module, configured to:
if available storage space of the external storage device is insufficient, delete a historical KV cache of a third to-be-processed session in the job queue from the external storage device. The third to-be-processed session is a second quantity of to-be-processed sessions at a queue tail of the job queue.

The processing module 901, the loading module 902, the loading module 1001, and the storage module 1002 may all be implemented by using software, or may be implemented by using hardware. For example, the following uses the processing module 901 as an example to describe an implementation of the processing module 901. Similarly, for implementations of the loading module 902, the loading module 1001, and the storage module 1002, refer to the implementation of the processing module 901.

The module is used as an example of a software functional unit, and the processing module 901 may include code run on a compute instance. The compute instance may include at least one of a physical host (a compute device), a virtual machine, or a container. Further, there may be one or more compute instances. For example, the processing module 901 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

The module is used as an example of a hardware functional unit, and the processing module 901 may include at least one compute device like a server. Alternatively, the processing module 901 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), a generic array logic (generic array logic, GAL), or any combination thereof.

A plurality of compute devices included in the processing module 901 may be distributed in a same region, or may be distributed in different regions. The plurality of compute devices included in the processing module 901 may be distributed in a same AZ, or may be distributed in different AZs. Similarly, the plurality of compute devices included in the processing module 901 may be distributed in a same VPC, or may be distributed in a plurality of VPCs. The plurality of compute devices may be any combination of compute devices such as a server, an ASIC, a PLD, a CPLD, an FPGA, and a GAL.

It should be noted that, in another embodiment, the processing module 901 may be configured to perform any step in the multi-turn session inference method, the loading module 902 may be configured to perform any step in the multi-turn session inference method, the loading module 1001 may be configured to perform any step in the multi-turn session inference method, and the storage module 1002 may be configured to perform any step in the multi-turn session inference method. The steps implemented by the processing module 901, the loading module 902, the loading module 1001, and the storage module 1002 may be specified as required. The processing module 901 and the loading module 902 separately implement different steps performed by the accelerator in the multi-turn session inference method to implement all functions of the multi-turn session inference apparatus shown in FIG. 9. Alternatively, the loading module 1001 and the storage module 1002 separately implement different steps performed by the host in the multi-turn session inference method to implement all functions of the multi-turn session inference apparatus shown in FIG. 10.

This application further provides a compute device 1100. FIG. 11 is a diagram of a structure of a compute device according to an embodiment of this application. As shown in FIG. 11, the compute device 1100 includes a bus 1101, a processor 1102, a memory 1103, and a communication interface 1104. The processor 1102, the memory 1103, and the communication interface 1104 communicate with each other through the bus 1101. The compute device 1100 may be a compute device or a terminal device. It should be understood that quantities of processors and memories in the compute device 1100 are not limited in this application.

The bus 1101 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 11, but this does not mean that there is only one bus or only one type of bus. The bus 1101 may include a path for transmitting information between various components (for example, the memory 1103, the processor 1102, and the communication interface 1104) of the compute device 1100.

The processor 1102 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1103 may include a volatile memory (volatile memory), for example, a random access memory (random access memory, RAM). The memory 1103 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1103 stores executable program code. The processor 1102 executes the executable program code to separately implement functions of the processing module 901 and the loading module 902, to implement steps performed by the accelerator in the multi-turn session inference method, or implement functions of the loading module 1001 and the storage module 1002, to implement steps performed by the host in the multi-turn session inference method. In other words, the memory 1103 stores instructions used to perform the multi-turn session inference method. FIG. 11 merely shows an example in which the memory 1103 stores the program code for implementing the functions of the processing module 901 and the loading module 902.

The communication interface 1104 uses a transceiver module such as but not limited to a network interface card or a transceiver, to implement communication between the compute device 1100 and another device or a communication network.

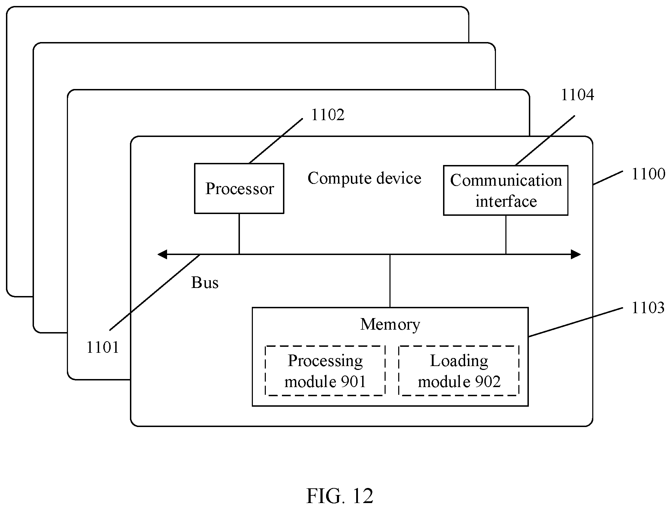

An embodiment of this application further provides a compute device cluster. FIG. 12 is a diagram of a compute device cluster according to an embodiment of this application. As shown in FIG. 12, the compute device cluster includes at least one compute device 1100. A memory 1103 in one or more compute devices 1100 in the compute device cluster may store same instructions for performing the multi-turn session inference method.

In some possible implementations, the memory 1103 in the one or more compute devices 1100 in the compute device cluster may also separately store a part of instructions for performing the multi-turn session inference method. In other words, a combination of the one or more compute devices 1100 may jointly execute the instructions for performing the multi-turn session inference method.

It should be noted that memories 1103 in different compute devices 1100 in the compute device cluster may store different instructions, and are separately configured to perform a part of functions of the multi-turn session inference apparatus. In other words, instructions stored in the memory 1103 in different compute devices 1100 may implement functions of one or more of the processing module 901, the loading module 902, the loading module 1001, and the storage module 1002.

It should be understood that functions of the compute device 1100 shown in FIG. 12 may alternatively be completed by a plurality of compute devices 1100.

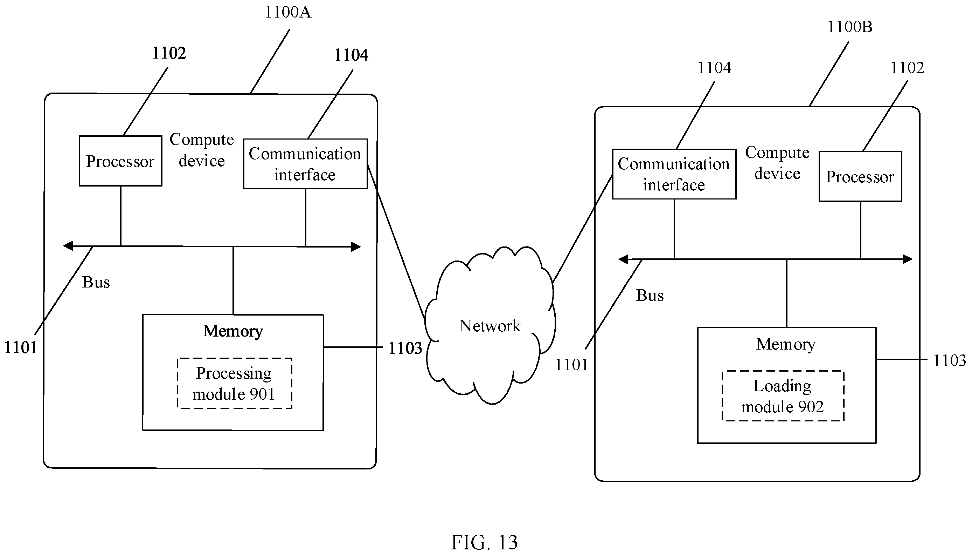

In some possible implementations, the one or more compute devices in the compute device cluster may be connected through a network. The network may be a wide area network, a local area network, or the like. FIG. 13 shows a possible implementation. FIG. 13 is a diagram of a possible implementation of a compute device cluster according to an embodiment of this application. As shown in FIG. 13, a compute device 1100A and a compute device 1100B are connected through a network. Specifically, the compute devices are connected to the network through communication interfaces in the compute devices. In this type of possible implementation, a memory 1103 in the compute device 1100A stores instructions for performing the function of the processing module 901. In FIG. 13, an example in which the memory 1103 in the compute device 1100A stores the instructions for performing the function of the processing module 901 is used. In addition, the memory 1103 in the compute device 1100B stores instructions for performing the function of the loading module 902. In FIG. 13, an example in which the memory 1103 in the compute device 1100B stores the instructions for performing the function of the loading module 902 is used.

An embodiment of this application further provides another compute device cluster. For a connection relationship between compute devices in the compute device cluster, refer to a connection manner in FIG. 12 or FIG. 13. A difference lies in that the memory 1103 in the one or more compute devices 1100 in the compute device cluster may store the same instructions for performing the multi-turn session inference method.

In some possible implementations, the memory 1103 in the one or more compute devices 1100 in the compute device cluster may also separately store a part of instructions for performing the multi-turn session inference method. In other words, a combination of the one or more compute devices 1100 may jointly execute the instructions for performing the multi-turn session inference method.

It should be noted that memories 1103 in different compute devices 1100 in the compute device cluster may store different instructions, and are separately configured to perform a part of functions of the multi-turn session inference apparatus. In other words, instructions stored in the memory 1103 in different compute devices 1100 may implement functions of one or more of the processing module 901, the loading module 902, the loading module 1001, and the storage module 1002.

An embodiment of this application provides an accelerator. The accelerator includes a computing core and a memory. The accelerator is configured to perform steps performed by the accelerator in the multi-turn session inference method according to any possible implementation of the foregoing method embodiments, the memory is configured to store computing data, and the computing core is configured to perform a computing operation on the computing data stored in the memory.

An embodiment of this application provides a host. The host includes a processor and a memory. The host is configured to perform steps performed by the host in the multi-turn session inference method according to any possible implementation of the foregoing method embodiments.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the multi-turn session inference method.

Embodiments of this application further provide a computer-readable storage medium. The computer-readable storage medium may be any usable medium that can be stored by a compute device, or a data storage device, such as a data center, integrating one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions instruct a compute device to perform the multi-turn session inference method.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, the session, the storage space, and the like in this application are all obtained in a case of full authorization.

Persons of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of this application.

It may be clearly understood by persons skilled in the art that, for the purpose of convenient and brief descriptions, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments in this application.

In addition, functional units in embodiments of this application may be integrated into one processing unit, each of the units may exist alone physically, or two or more units are integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or a part or all of the technical solutions may be implemented in a form of a software product. The computer software product is stored in a storage medium and includes several instructions for instructing a compute device (which may be a personal computer, a server, a compute device, or the like) to perform a part or all of steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of the various examples, a first session may be referred to as a second session, and similarly, a second session may be referred to as a first session. Both the first session and the second session may be node sessions, and in some cases may be separate and different sessions.

In this application, the term "at least one" means one or more, the term "a plurality of" means two or more, and the terms "system" and "network" in this specification may be often used interchangeably.

It should be further understood that the term "if" may be interpreted as "when" ("when" or "upon"), "in response to determining", or "in response to detecting". Similarly, based on the context, a phrase "if determining" or "if detecting [a stated condition or event]" may be interpreted as a meaning of "when determining", "in response to determining", "when detecting [a stated condition or event]", or "in response to detecting [a stated condition or event]".

The foregoing descriptions are merely specific implementations of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

A part or all of the foregoing embodiments may be implemented by using software, hardware, firmware, or any combination thereof. When software is used to implement embodiments, a part or all of embodiments may be implemented in a form of a computer program product. The computer program product includes one or more computer program instructions. When the computer program instructions are loaded and executed on a computer, the procedures or functions according to embodiments of this application are all or partially generated. The computer may be a general-purpose computer, a dedicated computer, a computer network, or other programmable apparatuses.

The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible to the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD), or a semiconductor medium (for example, a solid state drive)), or the like.

Persons of ordinary skill in the art may understand that a part or all of the steps of embodiments may be implemented by hardware or a program instructing related hardware. The program may be stored in a computer-readable storage medium. The storage medium may be a read-only memory, a magnetic disk, an optical disc, or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to a part of technical features thereof, without departing from the scope of the technical solutions of embodiments of this application.

## Claims

1. A computing system, wherein the computing system comprises a host, an accelerator of the host, and an external storage device;
the external storage device is configured to store a historical key-value cache KV cache of a session;
the host is configured to load a historical KV cache of a to-be-processed session in a job queue from the external storage device to a memory of the host; and
the accelerator is configured to perform, based on the job queue, inference on a first session in the job queue by using a generative large model, the first session is a turn of a multi-turn session, and the generative large model comprises N layers, wherein
when i^{th}-layer computing is performed on the first session, a historical KV cache that is of an input of the first session and that is at an (i+1)^{th} layer is loaded from the memory, and i is an integer greater than or equal to 1 and less than N.

2. The computing system according to claim 1, wherein the historical KV cache that is of the input of the first session and that is at the (i+1)^{th} layer is irrelevant to positional encoding of the input of the first session.

3. The computing system according to claim 2, wherein a quantity of tokens comprised in the input of the first session is greater than or equal to a quantity of tokens that is capable of being accommodated by a context window of the generative large model; and
the accelerator is configured to:
when performing i^{th}-layer computing on the first session, load, from the memory, a historical KV cache that is of a first sub-input and that is at the (i+1)^{th} layer, wherein the first sub-input is a sub-input of the input of the first session, and a quantity of tokens comprised in the first sub-input is less than the quantity of tokens that is capable of being accommodated by the context window.

4. The computing system according to claim 3, wherein the accelerator is further configured to:
embed positional encoding of the first sub-input into the historical KV cache that is of the first sub-input and that is at the (i+1)^{th} layer; and
perform (i+1)^{th}-layer computing on the first session based on the input of the first session and the historical KV cache, embedded with the positional encoding, that is of the first sub-input and that is at the (i+1)^{th} layer.

5. The computing system according to claim 1, wherein the accelerator comprises a first buffer and a second buffer, the first buffer is configured to store a historical KV cache of the first session, the second buffer is configured to store a historical KV cache that is of an input of a second session in the job queue and that is at a 1^{st} layer, and the second session is a 1^{st} to-be-processed session after the first session in the job queue; and
the accelerator is configured to:
when performing i^{th}-layer computing on the first session, load, from the memory to the first buffer, the historical KV cache that is of the input of the first session and that is at the (i+1)^{th} layer; and
when performing N^{th}-layer computing on the first session, load, from the memory to the second buffer, the historical KV cache that is of the input of the second session and that is at the 1^{st} layer.

6. The computing system according to claim 1, wherein the accelerator is further configured to:
when performing (i+1)^{th}-layer computing on the first session, write a KV cache generated by performing i^{th}-layer computing on the first session into the memory.

7. The computing system according to claim 6, wherein the accelerator comprises a third buffer, and the third buffer is configured to store a KV cache generated by the generative large model processing the first session; and
the accelerator of the host is configured to:
if a KV cache that has not been written into the memory exists in KV caches generated by the generative large model processing the first session when N^{th}-layer computing on the first session is completed, write, into the third buffer, the KV cache that has not been written into the memory; and
when the second session in the job queue is processed by using the generative large model, write the KV cache in the third buffer into the memory.

8. The computing system according to claim 1, wherein the host is configured to:
if a historical KV cache of a first to-be-processed session in the job queue does not exist in the memory, load the historical KV cache of the first to-be-processed session from the external storage device to the memory, wherein the first to-be-processed session is a first quantity of to-be-processed sessions at the head of the job queue.

9. The computing system according to claim 8, wherein a quantity of session turns comprised in the first to-be-processed session is determined based on capacity of the memory.

10. The computing system according to claim 8 or 9, wherein the host is configured to:
if available storage space of the memory is sufficient, load the historical KV cache of the first to-be-processed session from the external storage device to the memory; and
if the available storage space of the memory is insufficient, write a historical KV cache of a second to-be-processed session in the job queue from the memory into the external storage device, and load the historical KV cache of the first to-be-processed session from the external storage device to the memory, wherein the second to-be-processed session is a session in the job queue other than the first to-be-processed session.

11. The computing system according to claim 1, wherein the host is further configured to:
if available storage space of the external storage device is insufficient, delete a historical KV cache of a third to-be-processed session in the job queue from the external storage device, wherein the third to-be-processed session is a second quantity of to-be-processed sessions at a queue tail of the job queue.

12. A multi-turn session inference method, applied to a computing system, wherein the computing system comprises a host, an accelerator of the host, and an external storage device, the external storage device is configured to store a historical key-value cache KV cache of a session, the host is configured to load a historical KV cache of a to-be-processed session in a job queue from the external storage device to a memory of the host, and the method comprises:
performing, by the accelerator based on the job queue, inference on a first session in the job queue by using a generative large model, wherein the first session is a turn of a multi-turn session, and the generative large model comprises N layers, wherein
when i^{th}-layer computing is performed on the first session by the accelerator, a historical KV cache that is of an input of the first session and that is at an (i+1)^{th} layer is loaded from the memory to the accelerator, and i is an integer greater than or equal to 1 and less than N.

13. A multi-turn session inference method, applied to an accelerator of a host in a computing system, wherein the computing system further comprises the host and an external storage device, the external storage device is configured to store a historical key-value cache KV cache of a session, the host is configured to load a historical KV cache of a to-be-processed session in a job queue from the external storage device to a memory of the host, and the method comprises:
performing, based on the job queue, inference on a first session in the job queue by using a generative large model, wherein the first session is a turn of a multi-turn session, and the generative large model comprises N layers, wherein
when i^{th}-layer computing is performed on the first session, a historical KV cache that is of an input of the first session and that is at an (i+1)^{th} layer is loaded from the memory, and i is an integer greater than or equal to 1 and less than N.

14. The method according to claim 13, wherein the historical KV cache that is of the input of the first session and that is at the (i+1)^{th} layer is irrelevant to positional encoding of the input of the first session.

15. The method according to claim 14, wherein a quantity of tokens comprised in the input of the first session is greater than or equal to a quantity of tokens that is capable of being accommodated by a context window of the generative large model; and
when i^{th}-layer computing is performed on the first session, that the historical KV cache that is of the input of the first session and that is at the (i+1)^{th} layer is loaded from the memory comprises:
when i^{th}-layer computing is performed on the first session, loading, from the memory, a historical KV cache that is of a first sub-input and that is at the (i+1)^{th} layer, wherein the first sub-input is a sub-input of the input of the first session, and a quantity of tokens comprised in the first sub-input is less than the quantity of tokens that is capable of being accommodated by the context window.

16. The method according to claim 15, wherein the processing the first session in the job queue by using the generative large model comprises:
embedding positional encoding of the first sub-input into the historical KV cache that is of the first sub-input and that is at the (i+1)^{th} layer; and
performing (i+1)^{th}-layer computing on the first session based on the input of the first session and the historical KV cache, embedded with the positional encoding, that is of the first sub-input and that is at the (i+1)^{th} layer.

17. The method according to claim 13, wherein the accelerator comprises a first buffer and a second buffer, the first buffer is configured to store a historical KV cache of the first session, the second buffer is configured to store a historical KV cache that is of an input of a second session in the job queue and that is at a 1^{st} layer, and the second session is a 1^{st} to-be-processed session after the first session in the job queue; and
when i^{th}-layer computing is performed on the first session, that the historical KV cache that is of the input of the first session and that is at the (i+1)^{th} layer is loaded from the memory comprises:
when i^{th}-layer computing is performed on the first session, loading, from the memory to the first buffer, the historical KV cache that is of the input of the first session and that is at the (i+1)^{th} layer.

18. The method according to claim 17, wherein the method further comprises:
when N^{th}-layer computing is performed on the first session, loading, from the memory to the second buffer, the historical KV cache that is of the input of the second session and that is at the 1^{st} layer.

19. The method according to claim 13, wherein the method further comprises:
when (i+1)^{th}-layer computing is performed on the first session, writing a KV cache generated by performing i^{th}-layer computing on the first session into the memory.

20. The method according to claim 19, wherein the accelerator comprises a third buffer, and the third buffer is configured to store a KV cache generated by the generative large model processing the first session; and
when (i+1)^{th}-layer computing is performed on the first session, the writing the KV cache generated by performing i^{th}-layer computing on the first session into the memory comprises:
if a KV cache that has not been written into the memory exists in KV caches generated by the generative large model processing the first session when N^{th}-layer computing on the first session is completed, writing, into the third buffer, the KV cache that has not been written into the memory; and
when the second session in the job queue is processed by using the generative large model, writing the KV cache in the third buffer into the memory.

21. A multi-turn session inference method, applied to a host in a computing system, wherein the computing system further comprises an accelerator of the host and an external storage device, the external storage device is configured to store a historical key-value cache KV cache of a session, the accelerator is configured to perform, based on a job queue, inference on a first session in the job queue by using a generative large model, the first session is a turn of a multi-turn session, and the generative large model comprises N layers, wherein when i^{th}-layer computing is performed on the first session, a historical KV cache that is of an input of the first session and that is at an (i+1)^{th} layer is loaded from a memory of the host, and i is an integer greater than or equal to 1 and less than N; and
the method comprises:
loading a historical KV cache of a to-be-processed session in the job queue from the external storage device to the memory of the host; and
storing the historical KV cache of the to-be-processed session.

22. The method according to claim 21, wherein the loading the historical KV cache of the to-be-processed session in the job queue from the external storage device to the memory of the host comprises:
if a historical KV cache of a first to-be-processed session in the job queue does not exist in the memory, loading the historical KV cache of the first to-be-processed session from the external storage device to the memory, wherein the first to-be-processed session is a first quantity of to-be-processed sessions at the head of the job queue.

23. The method according to claim 22, wherein a quantity of session turns comprised in the first to-be-processed session is determined based on capacity of the memory.

24. The method according to claim 22 or 23, wherein if the historical KV cache of the first to-be-processed session in the job queue does not exist in the memory, the loading, by the host, the historical KV cache of the first to-be-processed session from the external storage device to the memory comprises:
if available storage space of the memory is sufficient, loading the historical KV cache of the first to-be-processed session from the external storage device to the memory; and
if the available storage space of the memory is insufficient, writing a historical KV cache of a second to-be-processed session in the job queue from the memory into the external storage device, and loading the historical KV cache of the first to-be-processed session from the external storage device to the memory, wherein the second to-be-processed session is a session in the job queue other than the first to-be-processed session.

25. The method according to any one of claims 21 to 24, wherein the method further comprises:
if available storage space of the external storage device is insufficient, deleting a historical KV cache of a third to-be-processed session in the job queue from the external storage device, wherein the third to-be-processed session is a second quantity of to-be-processed sessions at a queue tail of the job queue.

26. A multi-turn session inference apparatus, used in an accelerator of a host in a computing system, wherein the computing system further comprises the host and an external storage device, the external storage device is configured to store a historical key-value cache KV cache of a session, the host is configured to load a historical KV cache of a to-be-processed session in a job queue from the external storage device to a memory of the host, and the apparatus comprises:
a processing module, configured to perform, based on the job queue, inference on a first session in the job queue by using a generative large model, wherein the first session is a turn of a multi-turn session, and the generative large model comprises N layers; and
a loading module, configured to: when i^{th}-layer computing is performed on the first session, load a historical KV cache that is of an input of the first session and that is at an (i+1)^{th} layer from the memory, wherein i is an integer greater than or equal to 1 and less than N.

27. A multi-turn session inference apparatus, used in a host in a computing system, wherein the computing system further comprises an accelerator of the host and an external storage device, the external storage device is configured to store a historical key-value cache KV cache of a session, the accelerator is configured to perform, based on a job queue, inference on a first session in the job queue by using a generative large model, the first session is a turn of a multi-turn session, and the generative large model comprises N layers, wherein when i^{th}-layer computing is performed on the first session, a historical KV cache that is of an input of the first session and that is at an (i+1)^{th} layer is loaded from a memory of the host, and i is an integer greater than or equal to 1 and less than N; and
the apparatus comprises:
a loading module, configured to load a historical KV cache of a to-be-processed session in the job queue from the external storage device to the memory of the host.

28. An accelerator, wherein the accelerator comprises a computing core and a memory, the accelerator is configured to perform the multi-turn session inference method according to any one of claims 13 to 20, the memory is configured to store computing data, and the computing core is configured to perform a computing operation on the computing data stored in the memory.

29. A host, wherein the host comprises a processor and a memory, and the host is configured to perform the multi-turn session inference method according to any one of claims 21 to 25.

30. A compute device cluster, wherein the compute device cluster comprises at least one compute device, each compute device comprises a host and an accelerator of the host, an external storage device is located in the at least one compute device, the external storage device is configured to store a historical KV cache of a session, and the host is configured to load a historical KV cache of a to-be-processed session in a job queue from the external storage device to a memory of the host;
the host in the compute device cluster is configured to execute program code, to implement the steps performed by the host in the multi-turn session inference method according to any one of claims 13 to 20; and
the accelerator in the compute device cluster is configured to execute program code, to implement the steps performed by the accelerator in the multi-turn session inference method according to any one of claims 21 to 25.

31. A computer program product comprising instructions, wherein when the instructions are run by a compute device cluster, the compute device cluster is enabled to perform the multi-turn session inference method according to any one of claims 13 to 20 or claims 21 to 25.

32. A computer-readable storage medium, comprising computer program instructions, wherein when the computer program instructions are executed by a compute device cluster, the compute device cluster performs the multi-turn session inference method according to any one of claims 13 to 20 or claims 21 to 25.
